# EUROPEAN PATENT APPLICATION

(11) **EP 4 539 536 A1**
(43) Date of publication of application: **16.04.2025**
(21) Application number: 23823020.5
(22) Date of filing: 08.06.2023
(51) Int. Cl.: H04W 28/02

(54) **DATA PROCESSING METHOD AND APPARATUS, AND COMMUNICATION DEVICE**

(30) Priority: 13.06.2022 CN 202210666369
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Michalski Hüttermann & Partner Patentanwälte mbB
(86) International application number: PCT/CN2023/099151
(87) International publication number: WO 2023/241452

(57) **Abstract**

Embodiments of this application provide a data processing method and apparatus and a communication device, pertaining to the field of communication technologies. A data processing method applied to a first communication device includes: performing a first operation, where the first operation includes at least one of the following: scheduling a data packet in a data packet set based on a second delay budget and/or a second timer; performing a packet discard operation on the data packet in the data packet set based on the second delay budget and/or the second timer; skipping performing the packet discard operation on a data packet whose second delay budget expires and/or whose second timer expires; skipping performing an operation based on the second delay budget and/or the second timer on the data packet in the data packet set; performing an operation based on a first delay budget on the data packet set; performing an operation based on a first timer on the data packet set; or skipping performing the packet discard operation on a data packet set whose first delay budget expires and/or whose first timer expires.

## Description

### CROSS-REFERENCE TO RELATED APPLICATIONS

This application claims priority to Chinese Patent Application No. 202210666369.0 filed in China on June 13, 2022, the entire content of which is incorporated herein by reference.

### TECHNICAL FIELD

Embodiments of the present invention relate to the field of communication technologies, and in particular, to a data processing method and apparatus and a communication device.

### BACKGROUND

A data packet delay budget (Packet Delay Budget, PDB) represents a delay budget of a single data packet. A data packet set delay budget (PDU Set Delay Budget, PSDB) represents a delay budget of a group of data packets.

For an existing PDB in a guaranteed bit rate (Guaranteed Bit Rate, GBR) mode, if a data packet exceeds the PDB and cannot be transferred, the packet needs to be discarded. After the PSDB is introduced, if the PDB is not considered during data packet scheduling, transmission congestion may occur on data packets in a data packet set, while no method is specified in a conventional technology for processing performed when the PSDB and the PDB coexist.

### SUMMARY

Embodiments of the present invention provide a data processing method and apparatus and a communication device, to resolve a data processing problem when a data packet set delay budget and a data packet delay budget coexist.

To resolve the foregoing technical problem, the present invention is implemented as follows:

According to a first aspect, an embodiment of the present invention provides a data processing method, applied to a first communication device, the method including:
performing a first operation, where the first operation includes at least one of the following:
obtaining first information, where the first information includes at least one of the following: a third delay budget (for example, a PSDB in QoS), a fourth delay budget (for example, a PDB in QoS), or a first indication;
determining a second delay budget (for example, an actually used PDB or AN PDB) of a data packet in a data packet set;
determining a duration of a second timer of the data packet in the data packet set (for example, a PDU discard timer);
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget (for example, an actually used PSDB or AN PSDB);
performing an operation based on the first delay budget on the data packet set;
determining a duration of a first timer;
performing an operation based on the first timer (for example, a PDU discard timer) on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device (for example, a terminal): the duration of the first timer, the first delay budget, or the first indication.

The first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

According to a second aspect, an embodiment of the present invention provides a data processing method, applied to a second communication device, the method including:
obtaining second information, where the second information includes at least one of the following: a first delay budget, a duration of a first timer, or a first indication; and
performing a second operation, where the second operation includes at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

According to a third aspect, an embodiment of the present invention provides a data processing method, applied to a third communication device, the method including:
obtaining third information, where the third information includes at least one of the following: a first delay requirement, a second delay requirement, or a first indication; and
performing a third operation based on the third information.

The third operation includes at least one of the following:
determining first information; or
sending the first information, where the first information includes at least one of the following: a third delay budget (for example, a PSDB in QoS), a fourth delay budget (for example, a PDB in QoS), or the first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to a fourth aspect, an embodiment of the present invention provides a data processing method, applied to a fourth communication device, the method including:
sending third information, where the third information includes at least one of the following: a first delay requirement, a second delay requirement, or a first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to a fifth aspect, a data processing apparatus is provided, used in a first communication device, the apparatus including:
a first processing module, configured to perform a first operation, where the first operation includes at least one of the following:
obtaining first information, where the first information includes at least one of the following: a third delay budget (for example, a PSDB in QoS), a fourth delay budget (for example, a PDB in QoS), or a first indication;
determining a second delay budget (for example, an actually used PDB or AN PDB) of a data packet in a data packet set;
determining a duration of a second timer of the data packet in the data packet set (for example, a PDU discard timer);
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget (for example, an actually used PSDB or AN PSDB);
performing an operation based on the first delay budget on the data packet set;
determining a duration of a first timer;
performing an operation based on the first timer (for example, a PDU discard timer) on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device (for example, a terminal): the duration of the first timer, the first delay budget, or the first indication.

The first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

According to a sixth aspect, a data processing apparatus is provided, used in a second communication device, the apparatus including:
a first obtaining module, configured to obtain second information, where the second information includes at least one of the following: a first delay budget, a duration of a first timer, or a first indication; and
a second processing module, configured to perform a second operation, where the second operation includes at least one of the following:
   performing an operation corresponding to the first delay budget and/or the first timer;
   determining a second delay budget of a data packet in a data packet set;
   determining a duration of a second timer of the data packet in the data packet set; or
   performing an operation corresponding to the second delay budget and/or the second timer.

According to a seventh aspect, a data processing apparatus is provided, used in a third communication device, the apparatus including:
a second obtaining module, configured to obtain third information, where the third information includes at least one of the following: a first delay requirement, a second delay requirement, or a first indication; and
a third processing module, configured to perform a third operation based on the third information.

The third operation includes at least one of the following:
determining first information; or
sending the first information, where the first information includes at least one of the following: a third delay budget (for example, a PSDB in QoS), a fourth delay budget (for example, a PDB in QoS), or the first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to an eighth aspect, a data processing apparatus is provided, used in a fourth communication device, the apparatus including:
a first sending module, configured to send third information, where the third information includes at least one of the following: a first delay requirement, a second delay requirement, or a first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to a ninth aspect, a communication device is provided. The communication device is a first communication device. The communication device includes a processor and a memory. The memory stores a program or instructions executable on the processor. When the program or instructions are executed by the processor, steps of the method according to the first aspect are implemented.

According to a tenth aspect, a communication device is provided. The communication device is a first communication device, and includes a processor and a communication interface. The processor is configured to perform a first operation, where the first operation includes at least one of the following operations:
obtaining first information, where the first information includes at least one of the following: a third delay budget (for example, a PSDB in QoS), a fourth delay budget (for example, a PDB in QoS), or a first indication;
determining a second delay budget (for example, an actually used PDB or AN PDB) of a data packet in a data packet set;
determining a duration of a second timer of the data packet in the data packet set (for example, a PDU discard timer);
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget (for example, an actually used PSDB or AN PSDB);
performing an operation based on the first delay budget on the data packet set;
determining a duration of a first timer;
performing an operation based on the first timer (for example, a PDU discard timer) on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device (for example, a terminal): the duration of the first timer, the first delay budget, or the first indication.

The first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

According to an eleventh aspect, a communication device is provided. The communication device is a second communication device. The communication device includes a processor and a memory. The memory stores a program or instructions executable on the processor. When the program or instructions are executed by the processor, steps of the method according to the second aspect are implemented.

According to a twelfth aspect, a communication device is provided. The communication device is a second communication device, and includes a processor and a communication interface. The processor is configured to obtain second information, where the second information includes at least one of the following: a first delay budget, a duration of a first timer, or a first indication; and
perform a second operation, where the second operation includes at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

According to a thirteenth aspect, a communication device is provided. The communication device is a third communication device. The communication device includes a processor and a memory. The memory stores a program or instructions executable on the processor. When the program or instructions are executed by the processor, steps of the method according to the third aspect are implemented.

According to a fourteenth aspect, a communication device is provided. The communication device is a third communication device, and includes a processor and a communication interface. The processor is configured to obtain third information, where the third information includes at least one of the following: a first delay requirement, a second delay requirement, or a first indication; and
perform a third operation based on the third information.

The third operation includes at least one of the following:
determining first information; or
sending the first information, where the first information includes at least one of the following: a third delay budget (for example, a PSDB in QoS), a fourth delay budget (for example, a PDB in QoS), or the first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to a fifteenth aspect, a communication device is provided. The communication device is a fourth communication device. The communication device includes a processor and a memory. The memory stores a program or instructions executable on the processor. When the program or instructions are executed by the processor, steps of the method according to the fourth aspect are implemented.

According to a sixteenth aspect, a communication device is provided. The communication device is a fourth communication device, and includes a processor and a communication interface. The communication interface is configured to send third information. The third information includes at least one of the following: a first delay requirement, a second delay requirement, or a first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

According to a seventeenth aspect, a communication system is provided, including: a first communication device, a second communication device, a third communication device, and a fourth communication device. The first communication device may be configured to perform steps of the data processing method according to the first aspect. The second communication device may be configured to perform steps of the data processing method according to the second aspect. The third communication device may be configured to perform steps of the data processing method according to the third aspect. The fourth communication device may be configured to perform steps of the data processing method according to the fourth aspect.

According to an eighteenth aspect, a readable storage medium is provided. The readable storage medium stores a program or instructions. When the program or the instructions are executed by a processor, steps of the method according to the first aspect, steps of the method according to the second aspect, steps of the method according to the third aspect, or steps of the method according to the fourth aspect are implemented.

According to a nineteenth aspect, a chip is provided. The chip includes a processor and a communication interface. The communication interface is coupled to the processor. The processor is configured to run a program or instructions, to implement the method according to the first aspect, the method according to the second aspect, the method according to the third aspect, or the method according to the fourth aspect.

In embodiments of this application, specific operation steps of performing data processing by a first communication device based on a delay budget of a data packet set/a data packet and/or specific operation steps of performing data processing based on a duration of a timer of the data packet set and/or the data packet are provided when a data packet delay budget and a data packet set delay budget coexist.

### BRIEF DESCRIPTION OF THE DRAWINGS

FIG. 1 is a block diagram of a wireless communication system to which an embodiment of this application may be applied;
FIG. 2 is a first schematic flowchart of a data processing method according to an embodiment of this application;
FIG. 3 is a second schematic flowchart of a data processing method according to an embodiment of this application;
FIG. 4 is a third schematic flowchart of a data processing method according to an embodiment of this application;
FIG. 5 is a fourth schematic flowchart of a data processing method according to an embodiment of this application;
FIG. 6 is a fifth schematic flowchart of a data processing method according to an embodiment of this application;
FIG. 7 is a first structural diagram of a data processing apparatus according to an embodiment of this application;
FIG. 8 is a second structural diagram of a data processing apparatus according to an embodiment of this application;
FIG. 9 is a third structural diagram of a data processing apparatus according to an embodiment of this application;
FIG. 10 is a fourth structural diagram of a data processing apparatus according to an embodiment of this application; and
FIG. 11 is a structural diagram of a communication device according to an embodiment of this application.

### DETAILED DESCRIPTION

Technical solutions in embodiments of this application are clearly described below with reference to accompanying drawings in embodiments of this application. It is clear that the described embodiments are merely a part rather than all of embodiments of this application. All other embodiments obtained by a person skilled in the art based on embodiments of this application fall within the protection scope of this application.

Terms such as "first" and "second" in the specification and claims of this application are used to distinguish similar objects, rather than describe a specific sequence or order. It should be understood that, terms used in such a manner are interchangeable in a proper circumstance, so that embodiments of this application can be implemented in other orders than those illustrated or described herein. Moreover, objects distinguished by "first" and "second" are usually of a same type, and the numbers of the objects are not limited. For example, there may be one or more first objects. Furthermore, in the specification and claims, "and/or" represents at least one of associated objects, and the character "/" generally indicates an "or" relationship between the associated objects.

It should be noted that, technologies described in embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in embodiments of this application are often used interchangeably, and the technologies described may be applied to the foregoing systems and radio technologies as well as other systems and radio technologies. A new radio (New Radio, NR) system is described below for a purpose of illustration, and NR terminology is used in most of the following descriptions. However, these technologies may also be applied to applications other than NR system applications, for example, a 6th generation (6th Generation, 6G) communication system.

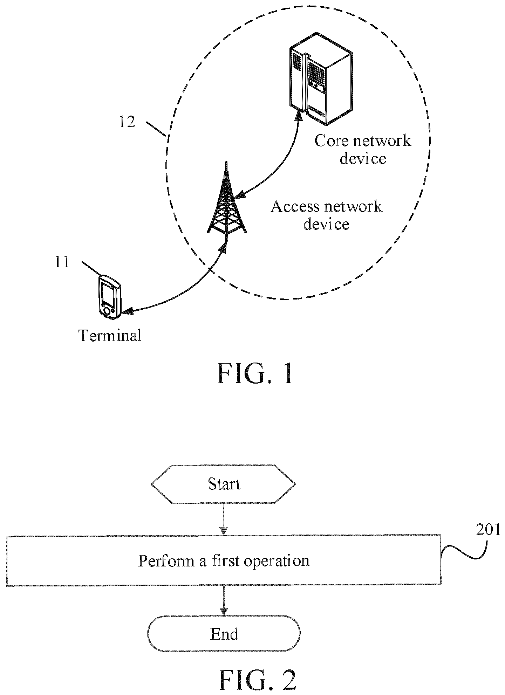

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), which may also be referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device having a wireless communication function, for example, a refrigerator, a television, a washing machine, or furniture), a game console, a personal computer (personal computer, PC), a teller machine, or a self-service machine. The wearable device includes a smart watch, a smart band, a smart headphone, smart glasses, smart jewelry (a smart bracelet, a smart wrist chain, a smart ring, a smart necklace, a smart anklet, or a smart ankle chain), a smart wrist band, smart clothing, or the like. It should be noted that, a specific type of the terminal 11 is not limited in this embodiment of this application. The network side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmitting receiving point (Transmitting Receiving Point, TRP), or some other proper terminology in the art. The base station is not limited to a specific technical vocabulary provided that the same technical effects are achieved. It should be noted that, in embodiments of this application, only a base station in an NR system is used as an example for description, while a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), or the like. It should be noted that, in embodiments of this application, only a core network device in the NR system is used as an example for description, while a specific type of the core network device is not limited.

In embodiments of this application, when a data packet set delay budget and a data packet delay budget may coexist, the following problems need to be resolved:
Problem 1: When both a PDB and a PSDB are sent to a RAN for scheduling, the RAN can still reuse an existing PDB for scheduling, but how to support an exception to packet discard based on the PDB further needs to be studied.

For example, there are the following options:
Option 1: The exception is executed, which is skipping performing a packet discard operation on a data packet whose PDB expires. For example, when the PDB expires and the PSDB has not expired, the data packet does not need to be discarded.
Option 2: When the PSDB has not expired, the PDB is not executed (including that scheduling is not performed based on timing of the PDB) or packet discard based on expiration of the PDB is ignored (ignored) (including that scheduling is performed based on timing of the PDB, and packet discard is not performed after expiration). For a data packet of a PDU set (PDU Set, PS) whose PSDB expires, if the data packet is allowed to continue to be sent, scheduling and packet discard control are performed per PDU (per PDU) in the PS based on the PDB.
Option 3: When the PSDB has not expired and a remaining PSDB is still greater than the PDB, the PDB is not executed (including that scheduling is not performed based on timing of the PDB) or packet discard based on expiration of the PDB is ignored (including that scheduling is performed based on timing of the PDB, and packet discard is not performed after expiration). When the remaining PSDB is less than or equal to the PDB, or for a data packet of a PS whose PSDB expires, if the data packet is allowed to continue to be sent, scheduling and packet discard control are performed per PDU in the PS based on the PDB. It is clear that Option 3 (Option3) is an optimization consideration of Option 2 (Option2). A data packet at a tail of the PS may have arrived at the RAN and waited for scheduling before the PSDB expires. Therefore, timing of the PDB needs to start at this time. If timing of the PDB starts after the PSDB expires, a waiting time of the data packet exceeds the PDB.

Problem 2: If the PSDB expires, a data packet that has not been transferred needs to be discarded. How to determine an access network packet delay budget (Access Network Packet Delay Budget, AN PDB) for a tail data packet (for example, the last one or more packets) of a PDU Set further needs to be studied.

An option is Actual AN PDB of the tail data packet = AN PSDB minus T1 (that is, a remaining amount of the PSDB). T1 is a time at which the tail data packet arrives at the RAN. When the RAN obtains the PDB while obtaining the PSDB, the AN PDB of the last packet is a smaller value of (the AN PSDB minus T1) and (the PDB minus a core network packet delay budget (Core Network Packet Delay Budget, CN PDB)). In other words, when the remaining amount of the PSDB may be less than the AN PDB, the AN PDB needs to be determined based on the remaining amount of the PSDB and the data arrival time, rather than based on the PDB.

Problem 3: How to perform timing of the PDB when the PDB of the data packet expires and a remaining amount of the PSDB is still greater than the PDB.

An option is as follows: When the PDB of the data packet expires and the remaining amount of the PSDB is still greater than the PDB, timing of the PDB needs to be re-performed for the data packet, that is, a delay of one PDB is automatically performed.

Optionally, obtaining may be understood as obtaining from configuration, receiving, receiving after requesting, obtaining through self-learning, obtaining through deduction based on information that is not received, or obtaining based on processing of received information, which may be specifically determined based on an actual need, and is not limited in embodiments of the present invention. For example, when indication information sent by a device for a capability is not received, it may be deduced that the device does not support the capability.

Optionally, sending may include broadcasting, broadcasting in a system message, and returning in response to a request.

In an optional embodiment of this application, a communication device may include at least one of the following: a communication network element and a terminal.

In an embodiment of this application, the communication network element may include at least one of the following: a core network element and a radio access network element.

In embodiments of the present invention, the core network element (CN network element) may include, but is not limited to, at least one of the following: a core network device, a core network node, a core network function, a core network element, a mobility management entity (Mobility Management Entity, MME), an access and mobility management function (Access Management Function, AMF), a session management function (Session Management Function, SMF), a user plane function (User Plane Function, UPF), a serving gateway (serving GW, SGW), a PDN gateway (PDN GateWay, PDN gateway), a policy control function (Policy Control Function, PCF), a policy and charging rules function (Policy and Charging Rules Function, PCRF), a serving GPRS support node (Serving GPRS Support Node, SGSN), a gateway GPRS support node (Gateway GPRS Support Node, GGSN), or an application function (Application Function, AF).

In embodiments of the present invention, the RAN network element may include, but is not limited to, at least one of the following: a radio access network device, a radio access network node, a radio access network function, a radio access network element, a 3GPP radio access network, a non-3GPP radio access network, a central unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP inter-working function (Non-3GPP Inter-Working Function, N3IWF), an access control (Access Controller, AC) node, an access point (Access Point, AP) device, or a wireless local area network (Wireless Local Area Networks, WLAN) node, or an N3IWF.

The base station may be a base transceiver station (Base Transceiver Station, BTS) in GSM or CDMA, or may be a NodeB (NodeB) in wideband code division multiple access (Wideband Code Division Multiple Access, WCDMA), or may be an evolved NodeB (eNB or e-NodeB, evolutional NodeB) in LTE or a 5G base station (gNB), which is not limited in embodiments of the present invention.

In an optional embodiment of this application, the UE may include one of the following: a terminal device, a terminal device and a card, or a card.

In an optional embodiment of this application, the card may include one of the following: a subscriber identity module (Subscriber Identity Module, SIM) card, a universal subscriber identity module (Universal Subscriber Identity Module, USIM) card, or an embedded-SIM (Embedded-SIM, eSIM) card.

In an optional embodiment of this application, the terminal may include a relay that supports a terminal function and/or a terminal that supports a relay function. The terminal may also be referred to as a terminal device or a user equipment (User Equipment, UE). The terminal may be a terminal side device such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It should be noted that, a specific type of the terminal is not limited in embodiments of the present invention.

In an embodiment of this application, a wireless communication network may be at least one of the following: a public network or a non-public network. Alternatively, a first network may be a non-public network.

In an embodiment of this application, the non-public network is short for a network that is not public. The non-public network may be referred to as one of the following: a non-public communication network. The non-public network may include at least one of the following deployment manners: a physical non-public network, a virtual non-public network, or a non-public network implemented on a public network. In an implementation, the non-public network is a closed access group (Closed Access Group, CAG). One CAG may include a group of terminals.

In an embodiment of this application, the non-public network may include or be referred to as a private network. The private network may be referred to as one of the following: a private communication network, a private net, a local area network (LAN), a private virtual network (PVN), an isolated communication network, a dedicated communication network, or other names. It should be noted that, naming is not specifically limited in embodiments of this application.

In an embodiment of this application, the public network is short for a network that is public. The public network may be referred to as one of the following: a public communication network or other names. It should be noted that, naming is not specifically limited in embodiments of this application.

In an embodiment of this application, a data packet size may be referred to as a data packet length.

In an embodiment of this application, a data packet may be referred to as a data frame.

In an optional embodiment of this application, a first delay budget of a data packet set is a delay budget actually used when a first operation is performed. A third delay budget is a quality of service (Quality of Service, QoS) requirement.

In an optional embodiment of this application, skipping performing a packet discard operation includes continuing to transfer.

A delay-sensitive guaranteed bit rate (Guaranteed Bit Rate, GBR) type includes a delay-critical (Delay-critical) GBR.

In an optional embodiment of this application, a remaining amount of a timer or a delay budget is a remaining valid duration after timing of the timer or the delay budget starts. For example, if the delay budget or a duration of the timer is 20 ms and timing has started for 4 ms, the remaining amount is 16 ms.

In an optional embodiment of this application, a data packet set may be referred to as a data set for short. The data packet set includes one or more data packets. Optionally, the data packet set has a boundary.

In an optional embodiment of this application, the data packet set is a concept in a cellular mobile communication network. The data packet set may be a paragraph including one or more data packets or a set including one or more data packets in a channel (for example, a QoS flow, a QoS sub-flow, or a radio bearer).

In an optional embodiment of this application, the data packet may be a PDU packet data unit.

In an optional embodiment of this application, the data packet set may be one of the following: a packet data unit set PDU Set, an instance of a PDU Set, a PDU Set type, an instance of a PDU Set type, or a data paragraph or a data packet set in a channel (for example, a QoS flow, a QoS sub-flow, or a radio bearer).
(1) In an implementation, one type of PDU Set may include a plurality of PDU Set instances. A type of PDU Set may be identified by a PDU Set identifier (for example, a QoS identifier at a PDU Set level). A plurality of different PDU Set instances of a same PDU Set may be distinguished by data packet set sequence numbers (for example, PDU Set sequence numbers).
(2) In another implementation, one PDU Set type may include a plurality of PDU sets. The PDU Sets are instances of the PDU Set type. The PDU Set type may be identified by a PDU Set identifier (for example, a QoS identifier at a PDU Set level). A plurality of different PDU sets of a same PDU Set type may be distinguished by data packet set sequence numbers (for example, PDU Set sequence numbers).

In an optional embodiment of this application, the data packet set type may be one of the following: a packet data unit set (PDU Set) or a channel (for example, a QoS flow, a QoS sub-flow, or a radio bearer). One data packet set type may correspond to a plurality of data packet sets. The data packet sets are instances of the data packet set type. The data packet set type may be identified by a data packet set type identifier. The data packet set type identifier is, for example, a QoS identifier at a data packet set level. In this case, the plurality of data packet sets may be distinguished by sequence numbers of the data packet sets.

In an implementation, types of one or more data packet sets are the same or different. Data packet sets of different types may be distinguished by identifiers of the data packet sets. Different data packet sets of a same type may be distinguished by sequence numbers of the data packet sets.

In an optional embodiment of this application, the PDU set includes one or more PDUs, and these PDUs carry payload (for example, a frame or a video slice video slice) of an information unit generated at an application level. In some implementations, an application layer needs all the PDUs in the PDU set when using the corresponding information unit. In other implementations, when some PDUs are lost, the application layer can still restore the whole or a part of the information unit.

In an optional embodiment of this application, the first delay budget (for example, a PSDB) indicates a delay budget for transferring a data packet set between a terminal and an anchor gateway (that is, a gateway terminating an N6 interface) (to be specific, a time from transfer of the first packet in the data packet set to transfer of the last packet cannot exceed the first delay budget). Optionally, the first delay budget further includes at least one of the following: a residency time of the data packet set in the terminal, or a residency time of the data packet set in the anchor gateway. The first delay budget may also be described as a delay budget of the data packet set.

In an optional embodiment of this application, the first delay budget or the delay budget of the data packet includes a packet set delay budget (for example, a PSDB).

In an optional embodiment of this application, the PSDB is a delay budget of a group of data packets or a data packet set.

In an implementation, the PSDB indicates an upper bound of a time within which a PDU Set may be delayed between a UE and an anchor gateway (that is, a gateway terminating an N6 interface) (to be specific, a time from transfer of the first packet in the PDU Set to transfer of the last packet cannot exceed the PSDB). For a specific QoS identifier (for example, a 5QI), values of the PSDB in an uplink and a downlink may be different or the same.

In an optional embodiment of this application, a first delay budget or a first access network delay budget (for example, an AN PSDB) may be one of the following: a delay budget for transferring a data packet set between a terminal and an RAN network element, or a value obtained by subtracting second core network delay information from the delay budget for transferring a data packet set between the terminal and the anchor gateway. Optionally, the first delay budget or the first access network delay budget further includes at least one of the following: a residency time of the data packet set in the terminal, or a residency time of the data packet set in the RAN network element.

In an optional embodiment of this application, a second delay budget (for example, a PDB) indicates a delay budget for transferring a data packet between a terminal and an anchor gateway (that is, a gateway terminating an N6 interface). Optionally, the second delay budget further includes at least one of the following: a residency time of the data packet in the terminal, and a residency time of the data packet in the anchor gateway. The second delay budget may also be described as a delay budget of the data packet.

The data packet delay budget includes a packet delay budget (PDB). In an optional embodiment of this application, the PDB is a delay budget of a single data packet.

In an implementation, the PDB indicates an upper bound of a time within which a PDU may be delayed between a UE and an anchor gateway (that is, a gateway terminating an N6 interface). The PDB may be applied to a downlink packet received by the anchor gateway (for example, a UPF) through the N6 interface and an uplink packet sent by the terminal. For a specific QoS identifier (for example, a 5QI), values of the PDB in an uplink and a downlink may be the same.

In an optional embodiment of this application, a second delay budget or a second access network delay budget (for example, an AN PDB) may be one of the following: a delay budget for transferring a data packet between a terminal and an RAN network element, or a value obtained by subtracting second core network delay information from a delay budget for transferring a data packet between the terminal and an anchor gateway. Optionally, the second delay budget or the second access network delay budget further includes at least one of the following: a residency time of the data packet in the terminal, or a residency time of the data packet in the RAN network element.

In an optional embodiment of this application, a second core network delay budget (for example, a CN PDB) indicates a delay budget for transferring a data packet between a radio access network RAN and an anchor gateway. The second core network delay budget may also be described as a core network delay budget of the data packet. Optionally, the second core network delay information further includes at least one of the following: a residency time of the data packet in the anchor gateway, and a residency time of the data packet in the RAN network element.

Scheduling and/or configuration of a link layer function includes at least one of the following: setting a scheduling priority or weight and a target operation point of HARQ.

In an optional embodiment of this application, the first data packet of a data packet set may be one of the following: a data packet whose sequence number is the first in the data packet set, or a data packet arriving first in the data packet set.

In an optional embodiment of this application, the last data packet of a data packet set may be one of the following: a data packet whose sequence number is the last in the data packet set, or a data packet arriving last in the data packet set.

In an optional embodiment of this application, a tail data packet of a data packet set may be one of the following: a data packet whose sequence number is at a tail in the data packet set, or a data packet whose arrival time is at a tail in the data packet set.

In an optional embodiment of this application, the channel includes at least one of the following: a session session (for example, a PDU session or a session between a RAN and a CN), a QoS flow, a QoS sub-flow, an evolved packet system (Evolved Packet System, EPS) bearer, a packet data protocol (Packet Data Protocol, PDP) context, a data radio bearer (Data Radio Bearer, DRB), a signaling radio bearer (Signaling Radio Bearer, SRB), an Internet protocol security (Internet Protocol Security, IPsec) association, or a GPRS tunnelling protocol (GPRS Tunnelling Protocol, GTP) tunnel (tunnel). The channel may be instantiated as any one of the foregoing types of channels.

In an optional embodiment of this application, the N6 interface is an interface between a communication system and a data network (for example, a data network outside the communication system).

In an optional embodiment of this application, an N3 interface is a user plane interface between a RAN and a CN.

In an optional embodiment of this application, an N9 interface is a user plane interface between gateways.

In an optional embodiment of this application, a Uu interface is an interface between a terminal and a RAN.

In an optional embodiment of this application, a data flow includes a service data flow (for example, a service data flow). The data flow may be referred to as a flow or a data flow. Optionally, the data unit is a data unit in a service data flow.

In an optional embodiment of this application, the data unit is alternatively a set including one or more data packets in a service data flow. Optionally, the data unit has a boundary.

In an optional embodiment of this application, the data unit may be embodied by a data flow. For example, the data unit is described by using description information of the data flow.

In an optional embodiment of the present invention, the data unit is a data unit of an application layer, and is sent from an application client or an application server. The data unit is a set including one or more data packets.

In an optional embodiment of this application, the data unit or a data unit type includes, but is not limited to, at least one of the following: a group of pictures (Group of pictures, GOP), a video frame, a video slice, description information of a tile, a field of view (Field of View, FOV), a depth of field (Depth of Field, DOF), an audio frame, or tactile information. Types of the plurality of data units are the same (for example, a plurality of consecutive B frames) or different (for example, an I frame, a P frame, and a B frame). Types of the plurality of data units are the same (for example, a plurality of consecutive B frames) or different (for example, an I frame, a P frame, and a B frame).
(1) In an implementation, one data unit may include a plurality of data unit instances. A data unit may be identified by description information of the data unit. A plurality of different data unit instances of a same data unit may be distinguished by data unit boundary information (for example, a start marker or an end marker).
(2) In an implementation, one data unit type may include a plurality of data units. The data units are instances of the data unit type. A type of data unit may be identified by description information of the data unit. A plurality of different data units of a same data unit type may be distinguished by data unit boundary information (for example, a start mark or an end mark).

With reference to FIG. 2, an embodiment of this application provides a data processing method, applied to a first communication device. The first communication device includes, but is not limited to, a RAN or a UE. The method includes the following steps.

Step 201: Perform a first operation, where the first operation includes at least one of the following:
obtaining first information, where the first information includes at least one of the following: a third delay budget (for example, a PSDB in QoS), a fourth delay budget (for example, a PDB in QoS), or a first indication;
determining a second delay budget (for example, an actually used PDB or AN PDB) of a data packet in a data packet set;
determining a duration of a second timer of the data packet in the data packet set (for example, a PDU discard timer (discard timer));
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget (for example, an actually used PSDB or AN PSDB);
performing an operation based on the first delay budget on the data packet set;
determining a duration of a first timer;
performing an operation based on the first timer (for example, a PDU discard timer) on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device (for example, a terminal): the duration of the first timer, the first delay budget, or the first indication.

The first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

In an optional embodiment, the first information is obtained from a first source-end device, and the first source-end device includes at least one of the following:
sending at least one of the following to the first target device: the duration of the first timer, the first delay budget, or the first indication, where the first target device includes a terminal.

In an optional implementation, the data packet in the data packet set may include one of the following: a data packet in a data packet set stored in the first communication device, a data packet that has not been transmitted in a data packet set, or a data packet whose successful transmission acknowledgment is not received in a data packet set.

In an optional implementation, the first delay budget is the same as the third delay budget.

For example, both the third delay budget and the first delay budget are a delay budget for transferring a data packet set between the terminal and an anchor gateway.

For example, both the third delay budget and the first delay budget are one of the following: a delay budget for transferring a data packet set between the terminal and an RAN network element, or a value obtained by subtracting core network delay information from the delay budget for transferring a data packet set between the terminal and the anchor gateway.

In another optional implementation, the first delay budget is different from the third delay budget. For example, the third delay budget is the delay budget for transferring a data packet set between the terminal and the anchor gateway. The first delay budget is the delay budget for transferring a data packet set between the terminal and the RAN network element. For example, the first delay budget is a sum of the third delay budget and the fourth delay budget.

In an optional implementation, the second delay budget is the same as the fourth delay budget. For example, both the second delay budget and the fourth delay budget are a delay budget for transferring a data packet between the terminal and the anchor gateway.

In another optional implementation, the second delay budget is different from the fourth delay budget. For example, the fourth delay budget is the delay budget for transferring a data packet between the terminal and the anchor gateway. The second delay budget is a delay budget for transferring a data packet between the terminal and the RAN network element.

In an optional implementation, the data packet in the data packet set is scheduled based on the second delay budget and/or the second timer. For example, a scheduling priority and/or a sending priority of the data packet in the data packet set is determined based on the second delay budget and/or the second timer. For example, a data packet with a small remaining amount of the second delay budget and/or a small remaining time of the second timer is preferentially scheduled and/or sent.

In an optional embodiment, the performing a first operation includes: performing, based on the obtained first information, an operation in the first operation other than the obtaining first information.

In an optional embodiment, the first delay budget (for example, a PSDB) indicates one of the following:
the delay budget for transferring a data packet set between the terminal and the anchor gateway;
the delay budget for transferring a data packet set between the terminal and the RAN network element; or
the value obtained by subtracting the second core network delay information from the delay budget for transferring a data packet set between the terminal and the anchor gateway;
   and/or
the third delay budget (for example, a PSDB) indicates one of the following:
   the delay budget for transferring a data packet set between the terminal and the anchor gateway;
   the delay budget for transferring a data packet set between the terminal and the RAN network element; or
   the value obtained by subtracting the second core network delay information from the delay budget for transferring a data packet set between the terminal and the anchor gateway;
      and/or
   the second delay budget (for example, a PDB) indicates one of the following:
      the delay budget for transferring a data packet between the terminal and the anchor gateway;
      the delay budget for transferring a data packet between the terminal and the RAN network element, or
      the value obtained by subtracting the second core network delay information from the delay budget for transferring a data packet between the terminal and the anchor gateway;
         and/or
      the fourth delay budget (for example, a PDB) indicates one of the following:
         the delay budget for transferring a data packet between the terminal and the anchor gateway;
         the delay budget for transferring a data packet between the terminal and the RAN network element, or
         the value obtained by subtracting the second core network delay information from the delay budget for transferring a data packet between the terminal and the anchor gateway.

In an implementation, an (N1)^{th} access network delay budget is a difference obtained by subtracting a CN PDB from an (N1)^{th} delay budget when the (N1)^{th} delay budget is a delay budget for transferring a data packet between the terminal and the anchor gateway. A value of N1 is one of the following: 2 or 4.

In an implementation, an (N2)^{th} access network delay budget is a difference obtained by subtracting the CN PDB from an (N2)^{th} delay budget when the (N2)^{th} delay budget is a delay budget for transferring a data packet set between the terminal and the anchor gateway. A value of N2 is one of the following: 1 or 3.

The second core network delay information includes one of the following: a second core network delay budget (for example, a CN PDU Delay Budget) or a second core network delay.

The second core network delay budget, or referred to as a core network delay budget of a data packet, indicates a delay budget (for example, a CN PDB) for transferring a data packet between the RAN network element and the anchor gateway.

The second core network delay, or referred to as a core network delay of a data packet, indicates a time required for transferring a data packet between the RAN network element and the anchor gateway.

In an optional implementation, a first access network delay budget (for example, an AN PSDB) indicates one of the following: the delay budget for transferring a data packet set between the terminal and the RAN network element; or a value obtained by subtracting the second core network delay information from the first delay budget.

In an optional implementation, a third access network delay budget (for example, an AN PSDB) indicates one of the following: the delay budget for transferring a data packet set between the terminal and the RAN network element; or a value obtained by subtracting the second core network delay information from the third delay budget.

In an optional implementation, a second access network delay budget (for example, an AN PDB) indicates one of the following: the delay budget for transferring a data packet between the terminal and the RAN network element, or a value obtained by subtracting the second core network delay information from the second delay budget.

In an optional implementation, a fourth access network delay budget (for example, an AN PDB) indicates one of the following: the delay budget for transferring a data packet between the terminal and the RAN network element, or a value obtained by subtracting the second core network delay information from the fourth delay budget.

In an optional embodiment, the first timer is a data packet set discard timer;
and/or
the duration of the first timer is a maximum time for saving a data packet set;
   and/or
the first timer indicates at least one of the following:
   starting timing from an arrival time of the first data packet in the data packet set;
   discarding the data packet in the data packet set after the first timer expires;
   determining, based on the first timer (for example, a remaining amount of the first timer), at least one of the following information of the data packet in the data packet set: a scheduling priority, a scheduling weight, a sending priority, or a sending weight;
   determining at least one of the following information of the data packet set based on the first timer (for example, the remaining amount of the first timer): a scheduling priority, a scheduling weight, a sending priority, or a sending weight; or
   configuring a link layer function based on the first timer;
      and/or
   the second timer is a data packet discard timer;
      and/or
   the duration of the second timer is a maximum time for saving a data packet; and
      and/or
   the second timer indicates at least one of the following:
      starting timing from an arrival time of the data packet;
      discarding the data packet after the second timer expires;
      determining, based on the second timer (for example, a remaining amount of the second timer), at least one of the following information of the data packet in the data packet set: a scheduling priority, a scheduling weight, a sending priority, or a sending weight; or
      configuring the link layer function based on the second timer (for example, the remaining amount of the second timer).

In an optional embodiment, the determining a second delay budget of a data packet in a data packet set includes:
determining a second delay budget of a first target data packet based on one of the following:
a fourth delay budget (for example, the second delay budget is the fourth delay budget);
a first value (for example, the second delay budget is the first value);
a larger value of the first value and the fourth delay budget (for example, the second delay budget is the larger value);
a second value (for example, the second delay budget is the second value);
a larger value of the second value and the fourth delay budget (for example, the second delay budget is the larger value);
the first delay budget (for example, the second delay budget is the first delay budget); or
the duration of the first timer (for example, the second delay budget is the duration of the first timer).

The first value is a value obtained by subtracting a first duration value from the first delay budget.

The second value is a value obtained by subtracting the first duration value from the duration of the first timer.

The first target data packet is a data packet in a first data packet set.

The first duration value is determined based on a value obtained by subtracting T1 from T2.

T1 is one of the following:
a receiving time at which the first communication device receives the first data packet in the first data packet set; or
a time at which the first data packet in the first data packet set arrives at the first communication device.

T2 is one of the following:
a receiving time at which the first communication device receives the first target data packet; or
a time at which the first target data packet arrives at the first communication device.

In an optional implementation, the first data packet set is any data packet set or any data packet set instance.

In an optional implementation, the first delay budget is a first delay budget of the first data packet set.

In an optional implementation, the first timer is a first timer of the first data packet set.

In an optional implementation, the first target data packet is the first data packet in the first data packet set. In this case, a duration of a second timer or the second delay budget is one of the following: the first delay budget or the duration of the first timer.

In another implementation, all data packets in the first data packet set arrive at the first communication device together. Therefore, T2 is the same as T1. In this case, a duration of a second timer or a second delay budget of any data packet in the first data packet set is one of the following: the first delay budget or the duration of the first timer.

Optionally, the second delay budget of the first target data packet is a delay budget actually used when the first operation is performed. The fourth delay budget is a QoS requirement.

In an implementation, the first delay budget indicates the delay budget for transferring a data packet set between the terminal and the RAN network element. The fourth delay budget indicates the delay budget for transferring a data packet between the terminal and the RAN network element.

In another implementation, the first delay budget indicates the delay budget for transferring a data packet set between the terminal and the anchor gateway. The fourth delay budget indicates the delay budget for transferring a data packet between the terminal and the RAN network element.

In another implementation, the first delay budget indicates the delay budget for transferring a data packet set between the terminal and the anchor gateway. The fourth delay budget indicates the delay budget for transferring a data packet between the terminal and the anchor gateway.

In an optional embodiment, the determining a duration of a second timer of the data packet in the data packet set includes:
determining a duration of a second timer of a first target data packet based on one of the following:
a second delay budget of the first target data packet (for example, the duration of the second timer is the second delay budget);
the fourth delay budget (for example, the duration of the second timer is the fourth delay budget);
a first value (for example, the duration of the second timer is the first value);
a larger value of the first value and the second delay budget of the first target data packet (for example, the duration of the second timer is the larger value of the first value and the second delay budget);
a larger value of the first value and the fourth delay budget (for example, the duration of the second timer is the larger value of the first value and the fourth delay budget);
a second value (for example, the duration of the second timer is the second value);
a larger value of the duration of the first timer and the second delay budget of the first target data packet (for example, the duration of the second timer is the larger value of the duration of the first timer and the second delay budget of the first target data packet);
a larger value of the duration of the first timer and the fourth delay budget (for example, the duration of the second timer is the larger value of the duration of the first timer and the fourth delay budget);
the first delay budget (for example, the duration of the second timer is the first delay budget); or
the duration of the first timer (for example, the duration of the second timer is the duration of the first timer).

The first value is a value obtained by subtracting a first duration value from the first delay budget.

The second value is a value obtained by subtracting the first duration value from the duration of the first timer.

The first target data packet is a data packet in a first data packet set.

The first duration value is determined based on a value obtained by subtracting T1 from T2.

T1 is one of the following:
a receiving time at which the first communication device receives the first data packet in the first data packet set; or
a time at which the first data packet in the first data packet set arrives at the first communication device.

T2 is one of the following:
a receiving time at which the first communication device receives the first target data packet; or
a time at which the first target data packet arrives at the first communication device.

In an optional implementation, the first data packet set is any data packet set or any data packet set instance.

In an optional implementation, the first delay budget is a first delay budget of the first data packet set.

In an optional implementation, the first timer is a first timer of the first data packet set.

In an optional implementation, the first target data packet is the first data packet in the first data packet set. In this case, the duration of the second timer or the second delay budget is one of the following: the first delay budget or the duration of the first timer.

In another implementation, all data packets in the first data packet set arrive at the first communication device together. Therefore, T2 is the same as T1. In this case, a duration of a second timer or a second delay budget of any data packet in the first data packet set is one of the following: the first delay budget or the duration of the first timer.

In an optional embodiment, the fourth delay budget is 6 ms, the first delay budget is 20 ms, and the first target data packet (for example, the last data packet) in the data packet set arrives at a 16^{th} ms (if an arrival time of the first data packet is a 0^{th} ms, as the arrival time of the first target data packet is 16 ms, the first duration value is 16 ms). In this case, the value obtained by subtracting the first duration value from the first delay budget is 4 ms, and a larger value (6 ms) may be used as the second delay budget of the first target data packet. For example, if the data packet in the data packet set is allowed to continue to be transmitted when the delay budget of the data packet set expires, the larger value (6 ms) may be used as the second delay budget of the target data packet.

In another optional embodiment, the first delay budget is 20 ms, and the first target data packet (for example, the last data packet) in the data packet set arrives at a 16^{th} ms (if an arrival time of the first data packet is a 0^{th} ms, as the arrival time of the first target data packet is 16 ms, the first duration value is 16 ms). In this case, the value obtained by subtracting the first duration value from the first delay budget is 4 ms, and the second delay budget of the first target data packet is 4 ms. For example, if the data packet in the data packet set is not allowed to continue to be transmitted when the delay budget of the data packet set expires, a remaining amount (4 ms) of the first delay budget may be used as the second delay budget of the target data packet.

In an optional embodiment, when a third condition is met, the second delay budget is determined to be one of the following: the larger value of the first value and the fourth delay budget, or the larger value of the duration of the first timer and the fourth delay budget;
and/or
when a fourth condition is met, the second delay budget is determined to be one of the following: the first value or the second value;
   and/or
when the third condition is met, the duration of the second timer is determined to be one of the following: the larger value of the first value and the second delay budget of the first target data packet, the larger value of the first value and the fourth delay budget, or the larger value of the duration of the first timer and the second delay budget of the first target data packet;
   and/or
when the fourth condition is met, the duration of the second timer is determined to be one of the following: the first value or the second value.

The first value is the value obtained by subtracting the first duration value from the first delay budget.

The second value is the value obtained by subtracting the first duration value from the duration of the first timer.

The third condition includes at least one of the following:
the data packet in the data packet set is allowed to continue to be transmitted when the first delay budget expires and/or the first timer expires; or
the operation based on the second delay budget and/or the second timer is allowed to be performed on the data packet in the data packet set when the first delay budget expires and/or the first timer expires.

The fourth condition includes at least one of the following:
the data packet in the data packet set is not allowed to continue to be transmitted when the first delay budget expires and/or the first timer expires; or
the operation based on the second delay budget and/or the second timer is not allowed to be performed on the data packet in the data packet set when the first delay budget expires and/or the first timer expires.

In an optional embodiment, the performing an operation based on the first timer on the data packet set includes at least one of the following:
starting timing of the first timer of the data packet set based on a time at which the first data packet in the data packet set arrives at the first communication device;
discarding or continuing to transfer, for a data packet set whose first timer expires, a data packet in the data packet set;
scheduling the data packet in the data packet set based on the first timer (for example, the remaining amount of the first timer);
determining, based on the first timer (for example, the remaining amount of the first timer), at least one of the following information of the data packet in the data packet set: a scheduling priority, a scheduling weight, a sending priority, or a sending weight;
determining at least one of the following information of the data packet set based on the first timer (for example, the remaining amount of the first timer): a scheduling priority, a scheduling weight, a sending priority, or a sending weight;
configuring the link layer function based on the first timer; or
determining the duration of the first timer based on one or more of the first delay budget, the second delay budget, and the fourth delay budget.

The duration of the first timer is determined to be one of the following:
the first delay budget;
a sum of the first delay budget and the fourth delay budget;
the first access network delay budget; or
a sum of the first access network delay budget and the fourth access network delay budget.

The first access network delay budget (for example, an AN PSDB) indicates one of the following: the delay budget for transferring a data packet set between the terminal and the RAN network element; or the value obtained by subtracting the second core network delay information from the first delay budget.

Optionally, the discarding or continuing to transfer, for a data packet set whose first timer expires, a data packet in the data packet set includes at least one of the following:
for a data packet set of a delay-sensitive GBR type or a channel to which the data packet set of the delay-sensitive GBR type belongs, for a data packet set whose first timer expires, a data packet of the data packet set may be discarded; or
for a data packet set or channel of another type, for a data packet set whose first timer expires, a data packet of the data packet set may continue to be transmitted.

In an optional implementation, the scheduling the data in the data packet set based on the first timer (for example, the remaining amount of the first timer) includes: first timers (for example, remaining amounts of the first timers) of different data packet sets may be different, and therefore, different scheduling may be performed based on the first timers (for example, the remaining amounts of the first timers).

In an optional implementation, the first delay budget indicates the delay budget for transferring a data packet set between the terminal and the RAN network element (that is, the first access network delay budget). The fourth delay budget indicates the delay budget for transferring a data packet between the terminal and the RAN network element (that is, the fourth access network delay budget).

In another optional implementation, the first delay budget indicates the delay budget for transferring a data packet set between the terminal and the anchor gateway. The fourth delay budget indicates the delay budget for transferring a data packet between the terminal and the RAN network element (that is, the fourth access network delay budget).

In another optional implementation, the first delay budget indicates the delay budget for transferring a data packet set between the terminal and the anchor gateway. The fourth delay budget indicates the delay budget for transferring a data packet between the terminal and the anchor gateway.

In an optional implementation, the first data packet set is any data packet set or any data packet set instance.

In an optional embodiment, the performing an operation based on the first delay budget on the data packet set includes at least one of the following:
starting timing of the first delay budget of the data packet set based on a time at which the first data packet in the data packet set arrives at the first communication device;
discarding or continuing to transfer, for a data packet set whose first delay budget expires, a data packet in the data packet set;
scheduling the data packet in the data packet set based on the first delay budget (for example, a remaining amount of the first delay budget);
determining, based on the first delay budget (for example, the remaining amount of the first delay budget), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget): a scheduling priority, a scheduling weight, a sending priority, or a sending weight;
configuring the link layer function based on the first delay budget; or
determining the first delay budget based on one or more of the third delay budget and the fourth delay budget.

The first delay budget (actual PSDB) is determined to be one of the following:
the third delay budget; or
the sum of the third delay budget and the fourth delay budget.

Optionally, the discarding or continuing to transfer, for a data packet set whose first delay budget expires, a data packet in the data packet set includes at least one of the following:
for a data packet set of the delay-sensitive GBR type or a channel to which the data packet set of the delay-sensitive GBR type belongs, for a data packet set whose first delay budget expires, a data packet of the data packet set may be discarded; or
for a data packet set or channel of another type, for a data packet set whose first delay budget expires, a data packet of the data packet set may continue to be transmitted.

In an implementation, the scheduling the data in the data packet set based on the first delay budget (for example, a remaining amount of the first delay budget) includes: first delay budgets (for example, remaining amounts of the first delay budgets) of different data packet sets may be different, and therefore, different scheduling may be performed based on the first delay budgets (for example, the remaining amounts of the first delay budgets).

Optionally, the first delay budget of the data packet set is a delay budget actually used when the first operation is performed. The third delay budget is a QoS requirement.

In an implementation, the first delay budget indicates the delay budget for transferring a data packet set between the terminal and the RAN network element (that is, the first access network delay budget). The third delay budget indicates the delay budget for transferring a data packet set between the terminal and the RAN network element (that is, the third access network delay budget). The fourth delay budget indicates the delay budget for transferring a data packet between the terminal and the RAN network element (that is, the fourth access network delay budget).

Optionally, the first access network delay budget is one of the following: the third access network delay budget (AN PSDB), or a sum of the third access network delay budget (AN PSDB) and the fourth access network delay budget (AN PDB).

In another implementation, the first delay budget indicates the delay budget for transferring a data packet set between the terminal and the anchor gateway. The third delay budget indicates the delay budget for transferring a data packet set between the terminal and the anchor gateway. The fourth delay budget indicates the delay budget for transferring a data packet between the terminal and the RAN network element (that is, the fourth access network delay budget).

Optionally, the first delay budget is one of the following: the third delay budget (PSDB), or a sum of the third delay budget (PSDB) and the fourth access network delay budget (AN PDB).

In another implementation, the first delay budget indicates the delay budget for transferring a data packet set between the terminal and the anchor gateway. The fourth delay budget indicates the delay budget for transferring a data packet between the terminal and the anchor gateway.

Optionally, the first delay budget is one of the following: the third delay budget (PSDB), or a sum of the third delay budget (PSDB) and the fourth delay budget (PDB).

In an implementation, the third access network delay budget is one of the following:
the third access network delay budget is a value obtained by subtracting (the core network delay budget of the data packet or the core network delay of the data packet) from the third delay budget.

In an optional embodiment, when a first condition is met, at least one of the following first operations is performed:
scheduling the data packet in the data packet set based on the second delay budget (for example, a remaining amount of the second delay budget) and/or the second timer (for example, the remaining amount of the second timer);
skipping performing the packet discard operation on a data packet whose second delay budget expires and/or whose second timer expires;
performing the operation based on the first delay budget and/or the first timer on the data packet set, and skipping performing the packet discard operation on a data packet whose second delay budget expires and/or whose second timer expires;
performing the operation based on the first delay budget and/or the first timer on the data packet set; or
skipping performing the operation based on the second delay budget and/or the second timer on the data packet in the data packet set.

The first condition includes at least one of the following:
the first delay budget has not expired;
the first delay budget has not expired, and the remaining amount of the first delay budget is greater than or equal to the second delay budget;
the first timer has not expired; or
the first timer has not expired, and the remaining amount of the first timer is greater than or equal to the duration of the second timer.

In an optional implementation, when the first condition is met, the operation based on the second delay budget and/or the second timer is not performed on the data packet in the data packet set.

In another optional implementation, when the first condition is met, the data packet in the data packet set is scheduled (for example, a scheduling priority or a sending priority is determined) based on the second delay budget and/or the second timer, and the packet discard operation is not performed on a data packet whose second delay budget and/or second timer expires.

In an optional implementation, the remaining amount of the first delay budget is a remaining valid duration after timing of a first delay budget corresponding to a data packet set starts.

In an optional implementation, the remaining amount of the first timer is a remaining valid duration after timing of a first timer corresponding to a data packet set starts.

In an optional embodiment, for the "skipping performing the packet discard operation on a data packet whose second delay budget expires and/or whose second timer expires", for example, when (the second delay budget expires and/or the second timer expires) and (the first delay budget expires and/or the first timer has not expired), the data packet does not need to be discarded, and/or the data packet continues to be transferred.

In an optional embodiment, for the "skipping performing the operation based on the second delay budget and/or the second timer on the data packet in the data packet set", for example, when (the first delay budget expires and/or the first timer has not expired), the second delay budget and/or the second timer is not performed. For example, the data packet is not scheduled based on the second delay budget and/or the second timer, timing is not performed for the second delay budget and/or the second timer, and certainly, packet discard due to expiration is not performed.

In an optional embodiment, when the first delay budget has not expired and the remaining amount of the first delay budget is greater than or equal to the second delay budget, the operation based on the second delay budget is not performed on the data packet in the data packet set. When the first delay budget has not expired and the remaining amount of the first delay budget is less than or equal to the second delay budget, the operation based on the second delay budget may be performed on the data packet in the data packet set.

In an optional embodiment, when a second condition is met, at least one of the following first operations is performed:
performing the packet discard operation on a data packet whose second delay budget expires and/or whose second timer expires; or
performing the operation based on the second delay budget and/or the second timer on the data packet in the data packet set.

The second condition includes at least one of the following:
the first delay budget expires;
the first delay budget has not expired, and the remaining amount of the first delay budget is less than or equal to the second delay budget;
the data packet in the data packet set is allowed to continue to be transmitted when the first delay budget expires and/or the first timer expires;
the operation based on the second delay budget and/or the second timer is allowed to be performed on the data packet in the data packet set when the first delay budget expires and/or the first timer expires;
the first timer expires;
the first timer has not expired, and the remaining amount of the first timer is less than or equal to the duration of the second timer; or
the data packet in the data packet set arrives at the first communication device after the first delay budget and/or the first timer expires.

In an optional embodiment, decoding can be performed only after transmission of all the data packets in the data packet set is completed. For example, the data packet set has a total of 20 data packets. When the first delay budget expires, there remain two data packets that have not been transmitted or have not been unsuccessfully transmitted, and 18 data packets that are successfully transmitted cannot be decoded. Therefore, in an implementation, the data packet in the data packet set is allowed to continue to be transmitted when the first delay budget expires and/or the first timer expires. However, this cannot be allowed indefinitely, but may be allowed for one more second delay budget (for example, one more PDB).

In an optional embodiment, the second delay budget is the fourth delay budget. For example, the remaining amount of the first delay budget is less than or equal to the received fourth delay budget.

In an optional embodiment, the performing the operation based on the first delay budget and/or the first timer on the data packet set includes at least one of the following:
starting timing of the first timer or timing of the first delay budget when the first data packet in the data packet set arrives;
performing the packet discard operation on a data packet set whose first delay budget expires and/or whose first timer expires;
scheduling the data packet in the data packet set based on the first delay budget (for example, the remaining amount of the first delay budget) and/or the first timer (for example, the remaining amount of the first timer);
determining, based on the first delay budget (for example, the remaining amount of the first delay budget) and/or the first timer (for example, the remaining amount of the first timer), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget) and/or the first timer (for example, the remaining amount of the first timer): a scheduling priority, a scheduling weight, a sending priority, or a sending weight; or
configuring the link layer function based on the first delay budget and/or the first timer.

In an optional embodiment, the performing the operation based on the second delay budget and/or the second timer on the data packet in the data packet set includes at least one of the following:
starting timing of the second timer or timing of the second delay budget for the data packet in the data packet set;
starting timing of the second timer or timing of the second delay budget based on a time at which the data packet arrives at the first communication device;
performing the packet discard operation on a data packet whose second delay budget expires and/or whose second timer expires;
scheduling the data packet in the data packet set based on the second delay budget (for example, a remaining amount of the second delay budget) and/or the second timer (for example, a remaining amount of the second timer);
determining at least one of the following information of the data packet in the data packet set based on the second delay budget (for example, the remaining amount of the second delay budget) and/or the second timer (for example, the remaining amount of the second timer): a scheduling priority, a scheduling weight, a sending priority, or a sending weight; or
configuring the link layer function based on the second delay budget and/or the second timer.

In an optional implementation, when the second condition is met, timing of the second timer or timing of the second delay budget is started for the data packet in the data packet set.

In another optional implementation, when the data packet in the data packet set arrives, timing of the second timer or timing of the second delay budget is started. However, only when the second condition is met, the packet discard operation is performed on the data packet whose second delay budget expires and/or whose second timer expires.

In an optional implementation, if an (M1)^{th} data packet in the data packet set arrives after the second condition is met (for example, the data packet arrives after the first delay budget or the first timer expires), timing of the second timer or timing of the second delay budget can be started based only on an arrival time of the data packet. If an (M2)^{th} data packet in the data packet set arrives before the second condition is met (for example, before the first delay budget or the first timer expires), timing of the second timer or timing of the second delay budget may be start when the second condition is met.

In an optional embodiment, when a fifth condition is met, at least one of the following first operations is performed:
skipping performing the packet discard operation on a data packet set whose first delay budget expires and/or whose first timer expires; or
performing the operation based on the second delay budget and/or the second timer on the data packet in the data packet set.

The fifth condition includes at least one of the following:
the first delay budget of the data packet set has not expired and/or the first timer of the data packet set has not expired;
the first delay budget of the data packet set expires and/or the first timer of the data packet set expires, and the data packet in the data packet set is allowed to continue to be transmitted when the first delay budget of the data packet set expires and/or the first timer of the data packet set expires; or
the first delay budget of the data packet set expires and/or the first timer of the data packet set expires, and the operation based on the second delay budget and/or the second timer is allowed to be performed on the data packet in the data packet set when the first delay budget of the data packet set expires and/or the first timer of the data packet set expires.

In an optional implementation, the skipping performing the packet discard operation on a data packet set whose first delay budget expires and/or whose first timer expires includes: continuing to transmit the data packet in the data packet set.

In an optional embodiment, when a sixth condition is met, the following first operation is performed:
performing the packet discard operation on the data packet set whose first delay budget expires and/or whose first timer expires.

The sixth condition includes at least one of the following:
the first delay budget of the data packet set expires and/or the first timer of the data packet set expires;
the data packet in the data packet set is not allowed to continue to be transmitted when the first delay budget of the data packet set expires and/or the first timer of the data packet set expires;
the operation based on the second delay budget and/or the second timer is not allowed to be performed on the data packet in the data packet set when the first delay budget of the data packet set expires and/or the first timer of the data packet set expires; or
the data packet set is of the delay-sensitive guaranteed bit rate GBR type or a channel to which the data packet set belongs is of the delay-sensitive GBR type.

In an optional embodiment, the scheduling the data packet in the data packet set based on the second delay budget and/or the second timer includes:
when a seventh condition is met, re-performing timing of the second delay budget and/or the second timer corresponding to the data packet.

The seventh condition includes at least one of the following:
the second delay budget expires and/or the second timer expires;
the remaining amount of the first delay budget and/or the remaining amount of the first timer is greater than the second delay budget; or
the remaining amount of the first delay budget and/or the remaining amount of the first timer is greater than the duration of the second timer.

For example, the second delay budget (for example, a PDB or an AN PDB) is 6 ms. When receiving the target data packet in the data packet set, the first communication device starts timing of the second delay budget. When the second delay budget expires, the target data packet has not been transmitted. In this case, the remaining amount of the first delay budget is 8 ms, which is greater than the second delay budget. Therefore, timing of a next second delay budget is performed for the target data packet. In other words, a delay of one second delay budget is performed for the target data packet.

In an optional implementation, an N^{th} condition further includes at least one of the following:
the first communication device obtains the third delay budget and the fourth delay budget;
the data packet set is of the delay-sensitive type or the channel to which the data packet set belongs is of the delay-sensitive type;
the data packet set is of the delay-sensitive guaranteed bit rate GBR type or the channel to which the data packet set belongs is of the delay-sensitive GBR type; or
a local policy requires to discard the data packet whose second delay budget expires and/or whose second timer expires.

N is one or more of 1 to 7.

In an optional embodiment, when the data packet set or the channel to which the data packet set belongs is of the delay-sensitive GBR type, the packet discard operation is performed on a data packet whose first object expires. If the data packet set is of another type, the data packet whose first object expires may not be discarded and/or may continue to be transmitted.

The first object may include at least one of the following: the second delay budget, the second timer, the first delay budget (for example, the first delay budget of the data packet set to which the data packet belongs), or the first timer (for example, the first timer of the data packet set to which the data packet belongs).

In an optional embodiment, although the local policy requires to discard the data packet whose second delay budget expires and/or whose second timer expires, when the first delay budget and/or the first timer has not expired, the data packet whose second delay budget expires and/or whose second timer expires may be exceptionally not discarded.

In an optional embodiment, when the data packet set or the channel to which the data packet set belongs is of the delay-sensitive GBR type, and the first delay budget and/or the first timer has not expired, an exception may be made, the data packet whose second delay budget expires and/or whose second timer expires may be exceptionally not discarded.

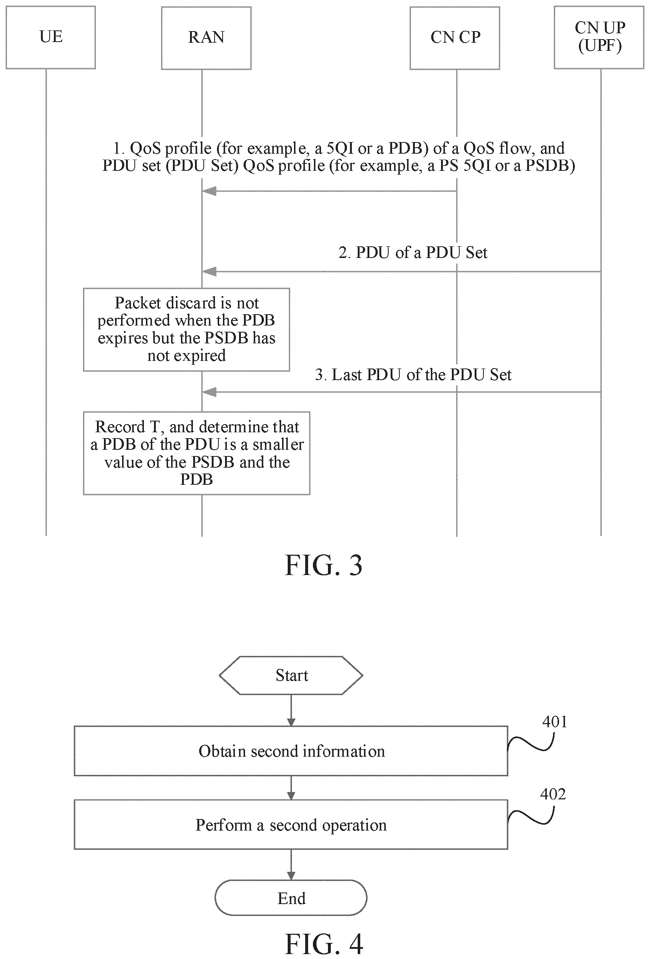

Using an example in which the first communication device is a RAN, the fourth delay budget is a PDB in QoS, and the third delay budget is a PSDB in QoS, assuming that the first source-end device is a CN CP, that is, the RAN receives the PDB and the PSDB that are sent by the CN CP, the PDB is a PDB (that is, the second delay budget) actually used by the RAN, and the PSDB is a PSDB (that is, the first delay budget) actually used by the RAN, when the RAN obtains both the PDB and the PSDB, as shown in FIG. 3, the method includes the following steps.

Step 1: The RAN receives the PSDB and the PDB that are sent by the CN CP. The PDB is carried in a QoS profile of a QoS flow, and the PDB may be indirectly indicated by a 5QI. The PSDB is carried in a PDU set QoS profile, and the PSDB may be indirectly obtained from a PS 5QI.

Step 2: Optionally, The RAN receives a PDU of a PDU set (Set), and the RAN performs scheduling on the data packet of the PS based on the PDB.

When the PDB expires and the PSDB has not expired, packet discard is not performed, or when the PDB expires and the PSDB has not expired, timing of the PDB is re-performed for the data packet.

Step 3: The RAN receives the last data packet of the PDU Set. An AN PDB is executed for the last data packet. PDB of the last data packet = AN PSDB minus T. Specifically, T is a time at which the last data packet arrives at the RAN.

Optionally, when the RAN obtains the PDB while obtaining the PSDB, the AN PDB of the last data packet received by the RAN is a smaller value of (the AN PSDB minus T) and (the PDB minus a CN PDB).

This embodiment of this application provides specific operation steps of performing data processing by a communication device based on a delay budget of a data packet set/a data packet and/or specific operation steps of performing data processing based on a duration of a timer of the data packet set and/or the data packet when a data packet delay budget and a data packet set delay budget coexist. Using an example in which the data packet set delay budget is a PSDB, the data packet delay budget is a PDB, and the first communication device is a RAN, this application provides an implementation solution in which the PDB continues to be supported in a QoS framework to which the PSDB is applied, providing operations performed by the RAN based on the PDB and/or the PSDB when the PDB and the PSDB coexist, and providing a specific implementation process in which the RAN supports an exception to packet discard based on the PDB. In addition, this embodiment of this application provides a specific manner of determining an AN PDB of a tail data packet of a data packet set when a data packet that has not been transferred when the PSDB expires needs to be discarded.

With reference to FIG. 4, an embodiment of this application provides a data processing method, applied to a second communication device. The second communication device includes, but is not limited to, a UE. The method includes the following steps.

Step 401: Obtain second information. The second information includes at least one of the following: a first delay budget, a duration of a first timer, or a first indication.

Step 402: Perform a second operation. The second operation includes at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

In an optional embodiment, the first delay budget (for example, a PSDB) indicates one of the following:
a delay budget for transferring a data packet set between a terminal and an anchor gateway;
a delay budget for transferring a data packet set between the terminal and an RAN network element; or
a value obtained by subtracting second core network delay information from the delay budget for transferring a data packet set between the terminal and the anchor gateway;
   and/or
the second delay budget (for example, a PDB) indicates one of the following:
the delay budget for transferring a data packet between the terminal and the anchor gateway;
the delay budget for transferring a data packet between the terminal and the RAN network element, or
the value obtained by subtracting the second core network delay information from the delay budget for transferring a data packet between the terminal and the anchor gateway.

The second core network delay information includes one of the following: a second core network delay budget (for example, a CN PDU Delay Budget) or a second core network delay.

The second core network delay budget, or referred to as a core network delay budget of a data packet, indicates a delay budget (for example, a CN PDB) for transferring a data packet between the RAN network element and the anchor gateway.

The second core network delay, or referred to as a core network delay of a data packet, indicates a time required for transferring a data packet between the RAN network element and the anchor gateway.

In an optional implementation, a first access network delay budget (for example, an AN PSDB) indicates one of the following: the delay budget for transferring a data packet set between the terminal and the RAN network element, or a value obtained by subtracting the second core network delay information from the first delay budget.

In an optional implementation, a second access network delay budget (for example, an AN PDB) indicates one of the following: the delay budget for transferring a data packet between the terminal and the RAN network element, or a value obtained by subtracting the second core network delay information from the second delay budget.

In an optional embodiment, the performing an operation corresponding to the first delay budget and/or the first timer includes one of the following:
starting timing of the first delay budget and/or the first timer of the data packet set based on a time at which the first data packet in the data packet set arrives at the second communication device;
discarding or continuing to transfer, for a data packet set whose first delay budget and/or first timer expires, a data packet in the data packet set;
scheduling the data packet in the data packet set based on the first delay budget (for example, a remaining amount of the first delay budget) and/or the first timer (for example, a remaining amount of the first timer);
determining, based on the first delay budget (for example, the remaining amount of the first delay budget) and/or the first timer (for example, the remaining amount of the first timer), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget) and/or the first timer (for example, the remaining amount of the first timer): a scheduling priority, a scheduling weight, a sending priority, or a sending weight;
configuring a link layer function based on the first delay budget and/or the first timer;
determining the duration of the first timer based on the first delay budget; or
determining that the duration of the first timer is the first delay budget.

In an optional implementation, the scheduling the data in the data packet set based on the first timer (for example, a remaining amount of the first timer) includes: first timers (for example, remaining amounts of the first timers) of different data packet sets may be different, and therefore, different scheduling may be performed based on the first timers (for example, the remaining amounts of the first timers).

Optionally, the discarding or continuing to transfer, for a data packet set whose first delay budget and/or first timer expires, a data packet in the data packet set includes at least one of the following:
for a data packet set of a delay-sensitive GBR type or a channel to which the data packet set of the delay-sensitive GBR type belongs, for a data packet set whose first delay budget and/or first timer expires, a data packet of the data packet set may be discarded; or
for a data packet set or channel of another type, for a data packet set whose first delay budget and/or first timer expires, a data packet of the data packet set may continue to be transmitted.

In an optional embodiment, the determining a second delay budget of a data packet in a data packet set includes one of the following:
determining a second delay budget of a second target data packet based on a value obtained by subtracting a second duration value from fourth information (for example, the second delay budget is the value obtained by subtracting the second duration value from the fourth information);
determining a second delay budget of the first data packet in a second data packet set based on the fourth information (for example, the second delay budget is the fourth information, that is, one of the following: a first delay budget, the first access network delay budget, or a duration of a first timer); or
determining the second delay budget of the second target data packet based on the fourth information (for example, the second delay budget is the fourth information, that is, one of the following: the first delay budget, the first access network delay budget, or the duration of the first timer).

The fourth information is one of the following: the first delay budget, the first access network delay budget, or the duration of the first timer).

The second target data packet is a data packet in the second data packet set.

The second duration value is determined based on a value obtained by subtracting T3 from T4 (for example, the second duration value is the value obtained by subtracting T3 from T4).

T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at the terminal.

T4 is one of the following:
a receiving time at which the second communication device receives the second target data packet;
a time at which the second target data packet arrives at the second communication device; or
a time at which the second target data packet starts waiting for scheduling at the terminal.

In an optional implementation, the second data packet set is any data packet set or any data packet set instance.

In an optional implementation, the first delay budget is a first delay budget of the second data packet set.

In an optional implementation, the first timer is a first timer of the second data packet set.

In an optional implementation, the second duration value is the value obtained by subtracting T3 from T4.

In an optional implementation, the second target data packet is the first data packet in the second data packet set. In this case, the duration of the second timer or the second delay budget is one of the following: the first delay budget, the first access network delay budget, or the duration of the first timer. In an implementation, the second delay budget of the second target data packet is a value obtained by subtracting the second duration value from the first delay budget, a value obtained by subtracting the second duration value from the first access network delay budget, or a value obtained by subtracting the second duration value from the duration of the first timer.

In an optional implementation, the second delay budget of the first data packet in the second data packet set is the first delay budget, the first access network delay budget, or the duration of the first timer.

In an optional implementation, the second delay budget of the second target data packet is the first delay budget, the first access network delay budget, or the duration of the first timer.

In another optional implementation, all data packets in the second data packet set arrive at the second communication device together. Therefore, T4 is the same as T3. In this case, a duration of a second timer or a second delay budget of any data packet in the second data packet set is one of the following: the first delay budget, the first access network delay budget, or the duration of the first timer.

In an optional embodiment, the determining a duration of a second timer of the data packet in the data packet set includes one of the following:
determining a duration of a second timer of a second target data packet based on a value obtained by subtracting a second duration value from fourth information (for example, the duration of the second timer is the value obtained by subtracting the second duration value from the fourth information);
determining a duration of a second timer of the first data packet in a second data packet set based on the fourth information (for example, the duration of the second timer is the fourth information);
determining the duration of the second timer of the second target data packet based on the fourth information (for example, the duration of the second timer is the fourth information, that is, one of the following: a first delay budget, the first access network delay budget, or a duration of a first timer); or
determining the duration of the second timer of the second target data packet based on a second delay budget (for example, the duration of the second timer is the second delay budget, that is, one of the following: the first delay budget, the first access network delay budget, or the duration of the first timer).

The fourth information is one of the following: the first delay budget, the first access network delay budget, or the duration of the first timer).

The second target data packet is a data packet in the second data packet set.

The second duration value is determined based on a value obtained by subtracting T3 from T4.

T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at the terminal.

T4 is one of the following:
a receiving time at which the second communication device receives the second target data packet;
a time at which the second target data packet arrives at the second communication device; or
a time at which the second target data packet starts waiting for scheduling at the terminal.

In an optional implementation, the second data packet set is any data packet set or any data packet set instance.

In an optional implementation, the first delay budget is a first delay budget of the second data packet set.

In an implementation, the first timer is a first timer of the second data packet set.

In an optional implementation, the second duration value is the value obtained by subtracting T3 from T4.

In an optional implementation, the second target data packet is the second data packet in the first data packet set. In this case, the duration of the second timer or the second delay budget is one of the following: the first delay budget, the first access network delay budget, or the duration of the first timer.

In an implementation, the duration of the second timer of the second target data packet is a value obtained by subtracting the second duration value from the first delay budget, a value obtained by subtracting the second duration value from the first access network delay budget, or a value obtained by subtracting the second duration value from the duration of the first timer.

In an implementation, the duration of the second timer of the first data packet in the second data packet set is the first delay budget, the first access network delay budget, or the duration of the first timer.

In an implementation, the duration of the second timer of the second target data packet is the first delay budget, the first access network delay budget, or the duration of the first timer. For example, any data packet (that is, the target data packet) in the second data packet set arrives at the second communication device at the same time.

In another optional implementation, all data packets in the second data packet set arrive at the second communication device together. Therefore, T4 is the same as T3. In this case, a duration of a second timer or a second delay budget of any data packet in the second data packet set is one of the following: the first delay budget, the first access network delay budget, or the duration of the first timer.

In an optional embodiment, the performing an operation corresponding to the second delay budget and/or the second timer includes at least one of the following:
determining at least one of the following information of the data packet in the data packet set based on the second delay budget (for example, a remaining amount of the second delay budget) and/or the second timer (for example, a remaining amount of the second timer): a scheduling priority, a scheduling weight, a sending priority, or a sending weight;
configuring the link layer function based on the second delay budget and/or the second timer; or
discarding or continuing to transfer the data packet in the data packet set when the second delay budget and/or the second timer expires.

Optionally, the discarding or continuing to transfer the data packet in the data packet set when the second delay budget and/or the second timer expires includes:
when the data packet, the data packet set, or the channel to which the data packet belongs is of the delay-sensitive GBR type, performing the packet discard operation on the data packet whose second delay budget expires and/or whose second timer expires; or
if the data packet, the data packet set, or the channel to which the data packet belongs is of another type, skipping packet discard for the data packet whose second delay budget expires and/or whose second timer expires, and/or continuing to transfer the data packet.

This embodiment of this application provides an implementation solution in which a data packet delay budget continues to be supported in a QoS framework to which a data packet set delay budget is applied, providing operations performed by a communication device based on the data packet delay budget and/or the data packet set delay budget when the data packet delay budget and the data packet set delay budget coexist, and providing a specific implementation process in which the communication device supports an exception to packet discard based on the data packet delay budget.

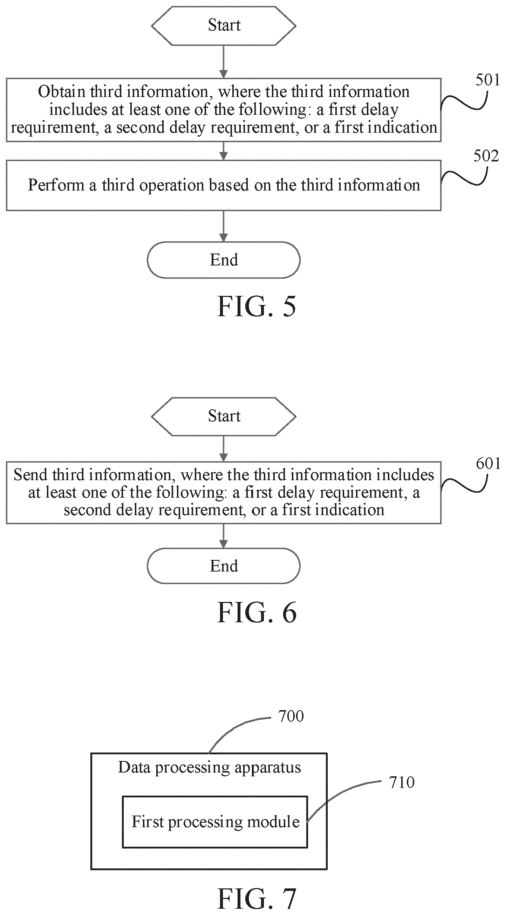

With reference to FIG. 5, an embodiment of the present invention provides a data processing method, applied to a third communication device. The third communication device includes, but is not limited to, at least one of the following: an SMF or a PC. The method includes the following steps.

Step 501: Obtain third information. The third information includes at least one of the following: a first delay requirement, a second delay requirement, or a first indication.

Step 502: Perform a third operation based on the third information.

The third operation includes at least one of the following:
determining first information; or
sending the first information, where the first information includes at least one of the following: a third delay budget (for example, a PSDB in QoS), a fourth delay budget (for example, a PDB in QoS), or the first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

In an implementation, the third information is received from a fourth communication device.

In an implementation, the first information is sent to at least one of the following: a first communication device, a second communication device, an RAN network element, a terminal, or a UPF.

In an implementation, the first delay requirement is used to determine the third delay budget. In an implementation, the third delay budget is equal to the first delay requirement.

In an implementation, the second delay requirement is used to determine the fourth delay budget. In an implementation, the fourth delay budget is equal to the second delay requirement.

Optionally, the first delay requirement is a preconfigured delay requirement or a delay requirement received from the third communication device.

Optionally, the second delay requirement is a preconfigured delay requirement or a delay requirement received from the third communication device.

In an optional embodiment, the third information is a QoS requirement and/or a data transfer requirement for a first object.

The first information is a QoS requirement and/or a data transfer requirement for a second object.

The first object includes at least one of the following: a data flow, a QoS policy (for example, a policy and charging control rule (Policy and Charging Control Rule, PCC Rule)) corresponding to a data flow, a QoS policy corresponding to a data packet set, or a data packet set.

The second object includes at least one of the following: a channel (for example, a QoS flow or a QoS sub-flow) or a data packet set.

In an implementation, the second object is used to transfer data of the first object, or the second object is a channel and/or a data packet set to which the first object is mapped.

In an optional embodiment, the third information is a QoS requirement and/or a data transfer requirement for a third object.

The first information is a QoS requirement and/or a data transfer requirement for a fourth object.

The third object includes at least one of the following: a data flow, a media data packet set, or a data packet set.

The fourth object includes at least one of the following: a QoS policy (for example, a PCC rule) corresponding to a data flow, a QoS policy corresponding to a data packet set, or a data packet set.

In an implementation, the fourth object is a QoS policy to which the third object is mapped.

In an optional embodiment, the first delay requirement indicates that a delay for transferring a data packet set between the terminal and an anchor gateway does not exceed a duration of the delay requirement.

The third delay budget (for example, a PSDB) indicates one of the following:
a delay budget for transferring a data packet set between the terminal and the anchor gateway; or
a delay budget for transferring a data packet set between the terminal and the RAN network element;
   and/or
the second delay requirement indicates that a delay for transferring a data packet between the terminal and the anchor gateway does not exceed a duration of the delay requirement;
   and/or
the fourth delay budget (for example, a PDB) indicates one of the following:
a delay budget for transferring a data packet between the terminal and the anchor gateway; or
a delay budget for transferring a data packet between the terminal and the RAN network element.

This embodiment of this application provides an implementation solution in which a data packet delay budget continues to be supported in a QoS framework to which a data packet set delay budget is applied, providing operations performed by a communication device based on the data packet delay budget and/or the data packet set delay budget when the data packet delay budget and the data packet set delay budget coexist, and providing a specific implementation process in which the communication device supports an exception to packet discard based on the data packet delay budget.

With reference to FIG. 6, an embodiment of the present invention provides a data processing method, applied to a fourth communication device. The fourth communication device includes, but is not limited to, at least one of the following: an AF, a NEF, or a UE. The method includes the following steps.

Step 601: Send third information. The third information includes at least one of the following: a first delay requirement, a second delay requirement, or a first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

In an implementation, the third information is sent to at least one of the following: a third communication device.

In an implementation, the first delay requirement is used to determine a third delay budget, and the second delay requirement is used to determine a fourth delay budget.

In an optional embodiment, the third information is a QoS requirement and/or a data transfer requirement for a first object.

The first object includes at least one of the following: a data flow, a QoS policy (for example, a PCC rule) corresponding to a data flow, a QoS policy corresponding to a data packet set, or a data packet set.

In an optional embodiment, the third information is a QoS requirement and/or a data transfer requirement for a third object.

The third object includes at least one of the following: a data flow, a media data packet set, or a data packet set.

In an optional embodiment, the first delay requirement indicates that a delay for transferring a data packet set between a terminal and an anchor gateway does not exceed a duration of the delay requirement;
and/or
the second delay requirement indicates that a delay for transferring a data packet between the terminal and the anchor gateway does not exceed a duration of the delay requirement.

This embodiment of this application provides an implementation solution in which a data packet delay budget continues to be supported in a QoS framework to which a data packet set delay budget is applied, providing operations performed by a communication device based on the data packet delay budget and/or the data packet set delay budget when the data packet delay budget and the data packet set delay budget coexist, and providing a specific implementation process in which the communication device supports an exception to packet discard based on the data packet delay budget.

As shown in FIG. 7, an embodiment of this application provides a data processing apparatus 700, used in a first communication device, the apparatus including:
a first processing module 710, configured to perform a first operation, where the first operation includes at least one of the following:
obtaining first information, where the first information includes at least one of the following: a third delay budget (for example, a PSDB in QoS), a fourth delay budget (for example, a PDB in QoS), or a first indication;
determining a second delay budget (for example, an actually used PDB or AN PDB) of a data packet in a data packet set;
determining a duration of a second timer of the data packet in the data packet set (for example, a PDU discard timer);
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget (for example, an actually used PSDB or AN PSDB);
performing an operation based on the first delay budget on the data packet set;
determining a duration of a first timer;
performing an operation based on the first timer (for example, a PDU discard timer) on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device (for example, a terminal): the duration of the first timer, the first delay budget, or the first indication.

The first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

Optionally, that the first processing module 710 performs a first operation includes:
performing, based on the obtained first information, an operation in the first operation other than the obtaining first information.

Optionally, the first delay budget (for example, a PSDB) indicates one of the following:
a delay budget for transferring a data packet set between a terminal and an anchor gateway;
a delay budget for transferring a data packet set between the terminal and an RAN network element; or
a value obtained by subtracting second core network delay information from the delay budget for transferring a data packet set between the terminal and the anchor gateway;
   and/or
the third delay budget (for example, a PSDB) indicates one of the following:
   the delay budget for transferring a data packet set between the terminal and the anchor gateway;
   the delay budget for transferring a data packet set between the terminal and the RAN network element; or
   the value obtained by subtracting the second core network delay information from the delay budget for transferring a data packet set between the terminal and the anchor gateway;
      and/or
   the second delay budget (for example, a PDB) indicates one of the following:
      a delay budget for transferring a data packet between the terminal and the anchor gateway;
      a delay budget for transferring a data packet between the terminal and the RAN network element, or
      a value obtained by subtracting the second core network delay information from the delay budget for transferring a data packet between the terminal and the anchor gateway.
         and/or
      the fourth delay budget (for example, a PDB) indicates one of the following:
         the delay budget for transferring a data packet between the terminal and the anchor gateway;
         the delay budget for transferring a data packet between the terminal and the RAN network element, or
         the value obtained by subtracting the second core network delay information from the delay budget for transferring a data packet between the terminal and the anchor gateway.

Optionally, the first timer is a data packet set discard timer;
and/or
the duration of the first timer is a maximum time for saving a data packet set;
   and/or
the first timer indicates at least one of the following:
   starting timing from an arrival time of the first data packet in the data packet set;
   discarding the data packet in the data packet set after the first timer expires;
   determining, based on the first timer (for example, a remaining amount of the first timer), at least one of the following information of the data packet in the data packet set: a scheduling priority, a scheduling weight, a sending priority, or a sending weight;
   determining at least one of the following information of the data packet set based on the first timer (for example, the remaining amount of the first timer): a scheduling priority, a scheduling weight, a sending priority, or a sending weight; or
   configuring a link layer function based on the first timer;
      and/or
   the second timer is a data packet discard timer;
      and/or
   the duration of the second timer is a maximum time for saving a data packet;
      and/or
   the second timer indicates at least one of the following:
      starting timing from an arrival time of the data packet;
      discarding the data packet after the second timer expires;
      determining, based on the second timer (for example, a remaining amount of the second timer), at least one of the following information of the data packet in the data packet set: a scheduling priority, a scheduling weight, a sending priority, or a sending weight; or
      configuring the link layer function based on the second timer (for example, the remaining amount of the second timer).

Optionally, when determining the second delay budget of the data packet in the data packet set, the first processing module is specifically configured to:
determine a second delay budget of a first target data packet based on one of the following:
a fourth delay budget (for example, the second delay budget is the fourth delay budget);
a first value (for example, the second delay budget is the first value);
a larger value of the first value and the fourth delay budget (for example, the second delay budget is the larger value);
a second value (for example, the second delay budget is the second value);
a larger value of the second value and the fourth delay budget (for example, the second delay budget is the larger value);
the first delay budget (for example, the second delay budget is the first delay budget); or
the duration of the first timer (for example, the second delay budget is the duration of the first timer).

The first value is a value obtained by subtracting a first duration value from the first delay budget.

The second value is a value obtained by subtracting the first duration value from the duration of the first timer.

The first target data packet is a data packet in a first data packet set.

The first duration value is determined based on a value obtained by subtracting T1 from T2.

T1 is one of the following:
a receiving time at which the first communication device receives the first data packet in the first data packet set; or
the time at which the first data packet in the first data packet set arrives at the first communication device.

T2 is one of the following:
a receiving time at which the first communication device receives the first target data packet; or
a time at which the first target data packet arrives at the first communication device.

Optionally, when determining the duration of the second timer of the data packet in the data packet set, the first processing module 710 is specifically configured to:
determine a duration of a second timer of a first target data packet based on one of the following:
a second delay budget of the first target data packet (for example, the duration of the second timer is the second delay budget);
a fourth delay budget (for example, the duration of the second timer is the fourth delay budget);
a first value (for example, the duration of the second timer is the first value);
a larger value of the first value and the second delay budget of the first target data packet (for example, the duration of the second timer is the larger value of the first value and the second delay budget);
a larger value of the first value and the fourth delay budget (for example, the duration of the second timer is the larger value of the first value and the fourth delay budget);
a second value (for example, the duration of the second timer is the second value);
a larger value of the duration of the first timer and the second delay budget of the first target data packet (for example, the duration of the second timer is the larger value of the duration of the first timer and the second delay budget of the first target data packet);
a larger value of the duration of the first timer and the fourth delay budget (for example, the duration of the second timer is the larger value of the duration of the first timer and the fourth delay budget);
the first delay budget (for example, the duration of the second timer is the first delay budget); or
the duration of the first timer (for example, the duration of the second timer is the duration of the first timer).

The first value is a value obtained by subtracting a first duration value from the first delay budget.

The second value is a value obtained by subtracting the first duration value from the duration of the first timer.

The first target data packet is a data packet in a first data packet set.

The first duration value is determined based on a value obtained by subtracting T1 from T2.

T1 is one of the following:
a receiving time at which the first communication device receives the first data packet in the first data packet set; or
a time at which the first data packet in the first data packet set arrives at the first communication device.

T2 is one of the following:
a receiving time at which the first communication device receives the first target data packet; or
a time at which the first target data packet arrives at the first communication device.

Optionally, when a third condition is met, the second delay budget is determined to be one of the following: the larger value of the first value and the fourth delay budget, or the larger value of the duration of the first timer and the fourth delay budget;
and/or
when a fourth condition is met, the second delay budget is determined to be one of the following: the first value or the second value.
   and/or
when the third condition is met, the duration of the second timer is determined to be one of the following: the larger value of the first value and the second delay budget of the first target data packet, the larger value of the first value and the fourth delay budget, or the larger value of the duration of the first timer and the second delay budget of the first target data packet;
   and/or
when the fourth condition is met, the duration of the second timer is determined to be one of the following: the first value or the second value.

The first value is the value obtained by subtracting the first duration value from the first delay budget.

The second value is the value obtained by subtracting the first duration value from the duration of the first timer.

The third condition includes at least one of the following:
the data packet in the data packet set is allowed to continue to be transmitted when the first delay budget expires and/or the first timer expires; or
the operation based on the second delay budget and/or the second timer is allowed to be performed on the data packet in the data packet set when the first delay budget expires and/or the first timer expires.

The fourth condition includes at least one of the following:
the data packet in the data packet set is not allowed to continue to be transmitted when the first delay budget expires and/or the first timer expires; or
the operation based on the second delay budget and/or the second timer is not allowed to be performed on the data packet in the data packet set when the first delay budget expires and/or the first timer expires.

Optionally, the first processing module 710 is specifically configured to perform at least one of the following:
starting timing of the first timer of the data packet set based on a time at which the first data packet in the data packet set arrives at the first communication device;
discarding or continuing to transfer, for a data packet set whose first timer expires, a data packet in the data packet set;
scheduling the data packet in the data packet set based on the first timer (for example, a remaining amount of the first timer);
determining, based on the first timer (for example, the remaining amount of the first timer), at least one of the following information of the data packet in the data packet set: a scheduling priority, a scheduling weight, a sending priority, or a sending weight; or
determining at least one of the following information of the data packet set based on the first timer (for example, the remaining amount of the first timer): a scheduling priority, a scheduling weight, a sending priority, or a sending weight;
configuring a link layer function based on the first timer; or
determining the duration of the first timer based on one or more of the first delay budget, the second delay budget, and the fourth delay budget.

The duration of the first timer is determined to be one of the following:
the first delay budget;
a sum of the first delay budget and the fourth delay budget;
a first access network delay budget; or
a sum of the first access network delay budget and the fourth access network delay budget.

The first access network delay budget (for example, an AN PSDB) indicates one of the following: a delay budget for transferring a data packet set between a terminal and an RAN network element; or a value obtained by subtracting second core network delay information from the first delay budget.

Optionally, the first processing module 710 is specifically configured to perform at least one of the following:
starting timing of the first delay budget of the data packet set based on a time at which the first data packet in the data packet set arrives at the first communication device;
discarding or continuing to transfer, for a data packet set whose first delay budget expires, a data packet in the data packet set;
scheduling the data packet in the data packet set based on the first delay budget (for example, a remaining amount of the first delay budget);
determining, based on the first delay budget (for example, the remaining amount of the first delay budget), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget): a scheduling priority, a scheduling weight, a sending priority, or a sending weight;
configuring a link layer function based on the first delay budget; or
determining the first delay budget based on one or more of the third delay budget and the fourth delay budget.

The first delay budget (actual PSDB) is determined to be one of the following:
the third delay budget; or
a sum of the third delay budget and the fourth delay budget.

Optionally, when a first condition is met, the first processing module 710 is configured to perform at least one of the following first operations:
scheduling the data packet in the data packet set based on the second delay budget (for example, a remaining amount of the second delay budget) and/or the second timer (for example, a remaining amount of the second timer);
skipping performing the packet discard operation on a data packet whose second delay budget expires and/or whose second timer expires;
performing the operation based on the first delay budget and/or the first timer on the data packet set, and skipping performing the packet discard operation on a data packet whose second delay budget expires and/or whose second timer expires;
performing the operation based on the first delay budget and/or the first timer on the data packet set; or
skipping performing the operation based on the second delay budget and/or the second timer on the data packet in the data packet set.

The first condition includes at least one of the following:
the first delay budget has not expired;
the first delay budget has not expired, and a remaining amount of the first delay budget is greater than or equal to the second delay budget;
the first timer has not expired; or
the first timer has not expired, and a remaining amount of the first timer is greater than or equal to the duration of the second timer.

Optionally, when a second condition is met, the first processing module 710 is configured to perform at least one of the following first operations:
performing the packet discard operation on a data packet whose second delay budget expires and/or whose second timer expires; or
performing the operation based on the second delay budget and/or the second timer on the data packet in the data packet set.

The second condition includes at least one of the following:
the first delay budget expires;
the first delay budget has not expired, and a remaining amount of the first delay budget is less than or equal to the second delay budget;
the data packet in the data packet set is allowed to continue to be transmitted when the first delay budget expires and/or the first timer expires;
the operation based on the second delay budget and/or the second timer is allowed to be performed on the data packet in the data packet set when the first delay budget expires and/or the first timer expires;
the first timer expires;
the first timer has not expired, and a remaining amount of the first timer is less than or equal to the duration of the second timer; or
the data packet in the data packet set arrives at the first communication device after the first delay budget and/or the first timer expires.

Optionally, the first processing module 710 is specifically configured to perform at least one of the following:
starting timing of the first timer or timing of the first delay budget when the first data packet in the data packet set arrives;
performing the packet discard operation on a data packet set whose first delay budget expires and/or whose first timer expires.
scheduling the data packet in the data packet set based on the first delay budget (for example, the remaining amount of the first delay budget) and/or the first timer (for example, the remaining amount of the first timer);
determining, based on the first delay budget (for example, the remaining amount of the first delay budget) and/or the first timer (for example, the remaining amount of the first timer), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget) and/or the first timer (for example, the remaining amount of the first timer): a scheduling priority, a scheduling weight, a sending priority, or a sending weight; or
configuring a link layer function based on the first delay budget and/or the first timer.

Optionally, the performing the operation based on the second delay budget and/or the second timer on the data packet in the data packet set includes at least one of the following:
starting timing of the second timer or timing of the second delay budget for the data packet in the data packet set;
starting timing of the second timer or timing of the second delay budget based on a time at which the data packet arrives at the first communication device;
performing the packet discard operation on a data packet whose second delay budget expires and/or whose second timer expires;
scheduling the data packet in the data packet set based on the second delay budget (for example, a remaining amount of the second delay budget) and/or the second timer (for example, a remaining amount of the second timer);
determining at least one of the following information of the data packet in the data packet set based on the second delay budget (for example, the remaining amount of the second delay budget) and/or the second timer (for example, the remaining amount of the second timer): a scheduling priority, a scheduling weight, a sending priority, or a sending weight; or
configuring a link layer function based on the second delay budget and/or the second timer.

Optionally, when a fifth condition is met, the first processing module 710 performs at least one of the following first operations:
skipping performing the packet discard operation on a data packet set whose first delay budget expires and/or whose first timer expires; or
performing the operation based on the second delay budget and/or the second timer on the data packet in the data packet set.

The fifth condition includes at least one of the following:
the first delay budget of the data packet set has not expired and/or the first timer of the data packet set has not expired;
the first delay budget of the data packet set expires and/or the first timer of the data packet set expires, and the data packet in the data packet set is allowed to continue to be transmitted when the first delay budget of the data packet set expires and/or the first timer of the data packet set expires; or
the first delay budget of the data packet set expires and/or the first timer of the data packet set expires, and the operation based on the second delay budget and/or the second timer is allowed to be performed on the data packet in the data packet set when the first delay budget of the data packet set expires and/or the first timer of the data packet set expires.

Optionally, when a sixth condition is met, the first processing module performs the following first operation:
performing the packet discard operation on the data packet set whose first delay budget expires and/or whose first timer expires.

The sixth condition includes at least one of the following:
the first delay budget of the data packet set expires and/or the first timer of the data packet set expires;
the data packet in the data packet set is not allowed to continue to be transmitted when the first delay budget of the data packet set expires and/or the first timer of the data packet set expires;
the operation based on the second delay budget and/or the second timer is not allowed to be performed on the data packet in the data packet set when the first delay budget of the data packet set expires and/or the first timer of the data packet set expires; or
the data packet set is of a delay-sensitive guaranteed bit rate GBR type or a channel to which the data packet set belongs is of the delay-sensitive GBR type.

Optionally, That the first processing module 710 schedules the data packet in the data packet set based on the second delay budget and/or the second timer specifically includes:
when a seventh condition is met, re-performing timing of the second delay budget and/or the second timer corresponding to the data packet.

The seventh condition includes at least one of the following:
the second delay budget expires and/or the second timer expires;
a remaining amount of the first delay budget and/or a remaining amount of the first timer is greater than the second delay budget; or
the remaining amount of the first delay budget and/or the remaining amount of the first timer is greater than the duration of the second timer.

Optionally, an N^{th} condition further includes at least one of the following:
the first communication device obtains the third delay budget and the fourth delay budget;
the data packet set is of a delay-sensitive type or the channel to which the data packet set belongs is of the delay-sensitive type;
the data packet set is of the delay-sensitive guaranteed bit rate GBR type or the channel to which the data packet set belongs is of the delay-sensitive GBR type; or
a local policy requires to discard the data packet whose second delay budget expires and/or whose second timer expires.

N is one or more of 1 to 7.

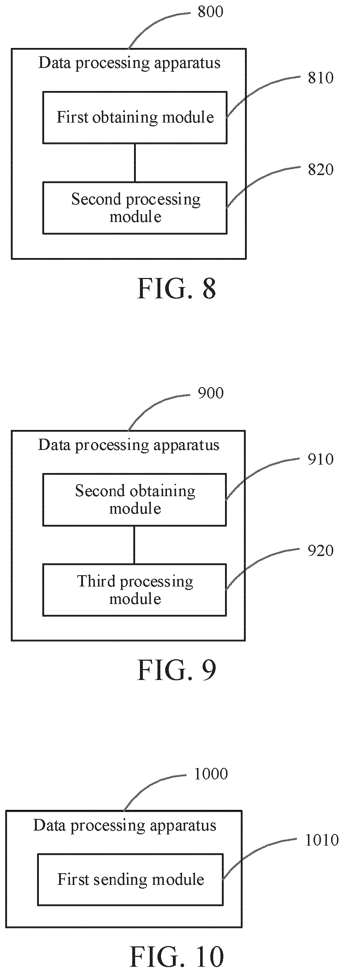

As shown in FIG. 8, an embodiment of this application provides a data processing apparatus 800, used in a second communication device, the apparatus including:
a first obtaining module 810, configured to obtain second information, where the second information includes at least one of the following: a first delay budget, a duration of a first timer, or a first indication; and
a second processing module 820, configured to perform a second operation, where the second operation includes at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

Optionally, the first delay budget (for example, a PSDB) indicates one of the following:
a delay budget for transferring a data packet set between a terminal and an anchor gateway;
a delay budget for transferring a data packet set between the terminal and an RAN network element; or
a value obtained by subtracting second core network delay information from the delay budget for transferring a data packet set between the terminal and the anchor gateway;
   and/or
the second delay budget (for example, a PDB) indicates one of the following:
   a delay budget for transferring a data packet between the terminal and the anchor gateway;
   a delay budget for transferring a data packet between the terminal and the RAN network element, or
   a value obtained by subtracting the second core network delay information from the delay budget for transferring a data packet between the terminal and the anchor gateway.

Optionally, the second processing module 820 is specifically configured to perform one of the following:
starting timing of the first delay budget and/or the first timer of the data packet set based on a time at which the first data packet in the data packet set arrives at the second communication device;
discarding or continuing to transfer, for a data packet set whose first delay budget and/or first timer expires, a data packet in the data packet set;
scheduling the data packet in the data packet set based on the first delay budget (for example, a remaining amount of the first delay budget) and/or the first timer (for example, a remaining amount of the first timer);
determining, based on the first delay budget (for example, the remaining amount of the first delay budget) and/or the first timer (for example, the remaining amount of the first timer), at least one of the following information of the data packet in the data packet set: a scheduling priority, a scheduling weight, a sending priority, or a sending weight;
determining at least one of the following information of the data packet set based on the first delay budget (for example, the remaining amount of the first delay budget) and/or the first timer (for example, the remaining amount of the first timer): a scheduling priority, a scheduling weight, a sending priority, or a sending weight;
configuring a link layer function based on the first delay budget and/or the first timer;
determining the duration of the first timer based on the first delay budget; or
determining that the duration of the first timer is the first delay budget.

Optionally, the second processing module 820 is specifically configured to perform one of the following:
determining a second delay budget of a second target data packet based on a value obtained by subtracting a second duration value from fourth information (for example, the second delay budget is the value obtained by subtracting the second duration value from the fourth information);
determining a second delay budget of the first data packet in a second data packet set based on the fourth information (for example, the second delay budget is the fourth information, that is, one of the following: a first delay budget, a first access network delay budget, or a duration of a first timer); or
determining the second delay budget of the second target data packet based on the fourth information (for example, the second delay budget is the fourth information, that is, one of the following: the first delay budget, the first access network delay budget, or the duration of the first timer).

The fourth information is one of the following: the first delay budget, the first access network delay budget, or the duration of the first timer).

The second target data packet is a data packet in the second data packet set.

The second duration value is determined based on a value obtained by subtracting T3 from T4 (for example, the second duration value is the value obtained by subtracting T3 from T4).

T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at a terminal.

T4 is one of the following:
a receiving time at which the second communication device receives the second target data packet;
a time at which the second target data packet arrives at the second communication device; or
a time at which the second target data packet starts waiting for scheduling at the terminal.

Optionally, the second processing module 820 is configured to perform one of the following:
determining a duration of a second timer of a second target data packet based on a value obtained by subtracting a second duration value from fourth information (for example, the duration of the second timer is the value obtained by subtracting the second duration value from the fourth information);
determining a duration of a second timer of the first data packet in a second data packet set based on the fourth information (for example, the duration of the second timer is the fourth information);
determining the duration of the second timer of the second target data packet based on the fourth information (for example, the duration of the second timer is the fourth information, that is, one of the following: a first delay budget, a first access network delay budget, or a duration of a first timer); or
determining the duration of the second timer of the second target data packet based on a second delay budget (for example, the duration of the second timer is the second delay budget, that is, one of the following: the first delay budget, the first access network delay budget, or the duration of the first timer).

The fourth information is one of the following: the first delay budget, the first access network delay budget, or the duration of the first timer).

The second target data packet is a data packet in the second data packet set.

The second duration value is determined based on a value obtained by subtracting T3 from T4.

T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at a terminal.

T4 is one of the following:
a receiving time at which the second communication device receives the second target data packet;
a time at which the second target data packet arrives at the second communication device; or
a time at which the second target data packet starts waiting for scheduling at the terminal.

Optionally, the second processing module 820 is configured to perform at least one of the following:
determining at least one of the following information of the data packet in the data packet set based on the second delay budget (for example, a remaining amount of the second delay budget) and/or the second timer (for example, a remaining amount of the second timer): a scheduling priority, a scheduling weight, a sending priority, or a sending weight;
configuring a link layer function based on the second delay budget and/or the second timer; or
discarding or continuing to transfer the data packet in the data packet set when the second delay budget and/or the second timer expires.

As shown in FIG. 9, an embodiment of this application provides a data processing apparatus 900, used in a third communication device, the apparatus including:
a second obtaining module 910, configured to obtain third information, where the third information includes at least one of the following: a first delay requirement, a second delay requirement, or a first indication; and
a third processing module 920, configured to perform a third operation based on the third information.

The third operation includes at least one of the following:
determining first information; or
sending the first information, where the first information includes at least one of the following: a third delay budget (for example, a PSDB in QoS), a fourth delay budget (for example, a PDB in QoS), or the first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

Optionally, the third information is a QoS requirement and/or a data transfer requirement for a first object.

The first information is a QoS requirement and/or a data transfer requirement for a second object.

The first object includes at least one of the following: a data flow, a QoS policy (for example, a PCC rule) corresponding to a data flow, a QoS policy corresponding to a data packet set, or a data packet set.

The second object includes at least one of the following: a channel (for example, a QoS flow or a QoS sub-flow) or a data packet set.

Optionally, the third information is a QoS requirement and/or a data transfer requirement for a third object.

The first information is a QoS requirement and/or a data transfer requirement for a fourth object.

The third object includes at least one of the following: a data flow, a media data packet set, or a data packet set.

The fourth object includes at least one of the following: a QoS policy (for example, a PCC rule) corresponding to a data flow, a QoS policy corresponding to a data packet set, or a data packet set.

Optionally, the first delay requirement indicates that a delay for transferring a data packet set between a terminal and an anchor gateway does not exceed a duration of the delay requirement.

The third delay budget (for example, a PSDB) indicates one of the following:
a delay budget for transferring a data packet set between the terminal and the anchor gateway; or
a delay budget for transferring a data packet set between the terminal and an RAN network element;
   and/or
the second delay requirement indicates that a delay for transferring a data packet between the terminal and the anchor gateway does not exceed a duration of the delay requirement;
   and/or
the fourth delay budget (for example, a PDB) indicates one of the following:
   a delay budget for transferring a data packet between the terminal and the anchor gateway; or
   a delay budget for transferring a data packet between the terminal and the RAN network element.

As shown in FIG. 10, an embodiment of this application provides a data processing apparatus 1000, used in a fourth communication device, the apparatus including:
a first sending module 1010, configured to send third information, where the third information includes at least one of the following: a first delay requirement, a second delay requirement, or a first indication.

The first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

Optionally, the third information is a QoS requirement and/or a data transfer requirement for a first object.

The first object includes at least one of the following: a data flow, a QoS policy (for example, a PCC rule) corresponding to a data flow, a QoS policy corresponding to a data packet set, or a data packet set.

Optionally, the third information is a QoS requirement and/or a data transfer requirement for a third object.

The third object includes at least one of the following: a data flow, a media data packet set, or a data packet set.

Optionally, the first delay requirement indicates that a delay for transferring a data packet set between a terminal and an anchor gateway does not exceed a duration of the delay requirement;
and/or
the second delay requirement indicates that a delay for transferring a data packet between the terminal and the anchor gateway does not exceed a duration of the delay requirement.

It should be noted that, corresponding methods are applied to the foregoing devices. Implementations of the data processing method embodiments are applicable to corresponding apparatuses, and the same technical effects can also be achieved.

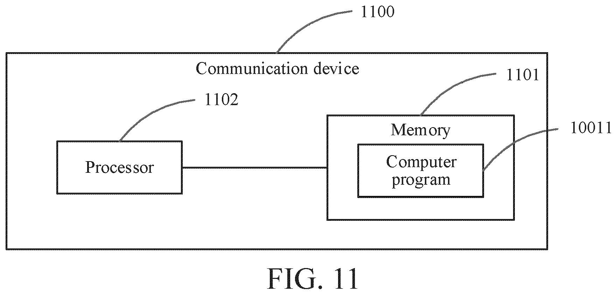

As shown in FIG. 11, an embodiment of the present invention further provides a communication device 1100, including a processor 1102, a memory 1101, and a computer program 11011 stored in the memory 1101 and executable on the processor 1102. When the computer program 11011 is executed by the processor, steps of the data processing method applied to a first communication device are implemented, or steps of the data processing method applied to a second communication device are implemented, or steps of the data processing method applied to a third communication device are implemented, or steps of the data processing method applied to a fourth communication device are implemented, while the same technical effects can be achieved. To avoid repetition, details are not described herein again.

An embodiment of the present invention further provides a computer-readable storage medium. The computer-readable storage medium stores a computer program, when the computer program is executed by a processor, processes of any one of the foregoing data processing method embodiments are implemented, and the same technical effects can be achieved. To avoid repetition, details are not described herein again. The computer-readable storage medium is, for example, a read-only memory (Read-Only Memory, ROM), a random access memory (Random Access Memory, RAM), a magnetic disk, or an optical disc.

It should be noted that, the terms "include", "comprise", and any variants thereof in the specification are intended to cover a non-exclusive inclusion. Therefore, a process, method, object, or apparatus that includes a series of elements not only includes such elements, but also includes other elements not specified expressly, or may include inherent elements of the process, method, object, or apparatus. Unless otherwise specified, an element defined by "include a/an..." does not exclude other same elements existing in the process, method, object, or apparatus that includes the element.

Based on the foregoing descriptions of the embodiments, a person skilled in the art may clearly understand that the methods of the foregoing embodiments may be implemented by software in addition to a necessary universal hardware platform or by hardware. In most circumstances, the former is an example implementation. Based on such an understanding, the technical solutions of the present invention essentially, or the part contributing to a conventional technology, may be presented in a form of a software product. The computer software product is stored in a storage medium (for example, a ROM/RAM, a magnetic disk, or an optical disc), including several instructions for instructing a terminal (which may be a mobile phone, a computer, a server, an air conditioner, a network device, or the like) to perform the methods according to embodiments of the present invention.

Embodiments of the present invention are described above with reference to the accompanying drawings, but the present invention is not limited to the specific embodiments, and the specific embodiments are merely examples rather than limitative. A person of ordinary skill in the art may make various variations under the teaching of the present invention without departing from the essence of the present invention and the protection scope of the claims, and such variations shall all fall within the protection scope of the present invention.

## Claims

1. A data processing method, applied to a first communication device, the method comprising:
performing a first operation, wherein the first operation comprises at least one of the following:
obtaining first information, wherein the first information comprises at least one of the following: a third delay budget, a fourth delay budget, or a first indication;
determining a second delay budget of a data packet in a data packet set;
determining a duration of a second timer of the data packet in the data packet set;
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget;
performing an operation based on the first delay budget on the data packet set;
determining a duration of a first timer;
performing an operation based on the first timer on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device: the duration of the first timer, the first delay budget, or the first indication, wherein
the first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

2. The method according to claim 1, wherein the performing a first operation comprises:
performing, based on the obtained first information, an operation in the first operation other than the obtaining first information.

3. The method according to claim 1, wherein
the first delay budget indicates one of the following:
a delay budget for transferring a data packet set between a terminal and an anchor gateway;
a delay budget for transferring a data packet set between the terminal and a RAN network element; or
a value obtained by subtracting second core network delay information from the delay budget for transferring a data packet set between the terminal and the anchor gateway;
and/or
the third delay budget indicates one of the following:
the delay budget for transferring a data packet set between the terminal and the anchor gateway;
the delay budget for transferring a data packet set between the terminal and the RAN network element; or
the value obtained by subtracting the second core network delay information from the delay budget for transferring a data packet set between the terminal and the anchor gateway;
and/or
the second delay budget indicates one of the following:
a delay budget for transferring a data packet between the terminal and the anchor gateway;
a delay budget for transferring a data packet between the terminal and the RAN network element; or
a value obtained by subtracting the second core network delay information from the delay budget for transferring a data packet between the terminal and the anchor gateway;
and/or
the fourth delay budget indicates one of the following:
the delay budget for transferring a data packet between the terminal and the anchor gateway;
the delay budget for transferring a data packet between the terminal and the RAN network element; or
the value obtained by subtracting the second core network delay information from the delay budget for transferring a data packet between the terminal and the anchor gateway.

4. The method according to claim 1, wherein
the first timer is a data packet set discard timer;
and/or
the duration of the first timer is a maximum time for saving a data packet set;
and/or
the first timer indicates at least one of the following:
starting timing from an arrival time of the first data packet in the data packet set;
discarding the data packet in the data packet set after the first timer expires;
determining, based on the first timer, at least one of the following information of the data packet in the data packet set: a scheduling priority, a scheduling weight, a sending priority, or a sending weight;
determining at least one of the following information of the data packet set based on the first timer: a scheduling priority, a scheduling weight, a sending priority, or a sending weight; or
configuring a link layer function based on the first timer;
and/or
the second timer is a data packet discard timer;
and/or
the duration of the second timer is a maximum time for saving a data packet;
and/or
the second timer indicates at least one of the following:
starting timing from an arrival time of the data packet;
discarding the data packet after the second timer expires;
determining, based on the second timer, at least one of the following information of the data packet in the data packet set: a scheduling priority, a scheduling weight, a sending priority, or a sending weight; or
configuring the link layer function based on the second timer.

5. The method according to claim 1, wherein the determining a second delay budget of a data packet in a data packet set comprises:
determining a second delay budget of a first target data packet based on one of the following:
a fourth delay budget;
a first value;
a larger value of the first value and the fourth delay budget;
a second value;
a larger value of the second value and the fourth delay budget;
the first delay budget; or
the duration of the first timer, wherein
the first value is a value obtained by subtracting a first duration value from the first delay budget;
the second value is a value obtained by subtracting the first duration value from the duration of the first timer;
the first target data packet is a data packet in a first data packet set;
the first duration value is determined based on a value obtained by subtracting T1 from T2;
T1 is one of the following:
a receiving time at which the first communication device receives the first data packet in the first data packet set; or
a time at which the first data packet in the first data packet set arrives at the first communication device; and
T2 is one of the following:
a receiving time at which the first communication device receives the first target data packet; or
a time at which the first target data packet arrives at the first communication device.

6. The method according to claim 1, wherein the determining a duration of a second timer of the data packet in the data packet set comprises:
determining a duration of a second timer of a first target data packet based on one of the following:
a second delay budget of the first target data packet;
a fourth delay budget;
a first value;
a larger value of the first value and the second delay budget of the first target data packet;
a larger value of the first value and the fourth delay budget;
a second value;
a larger value of the duration of the first timer and the second delay budget of the first target data packet;
a larger value of the duration of the first timer and the fourth delay budget;
the first delay budget; or
the duration of the first timer, wherein
the first value is a value obtained by subtracting a first duration value from the first delay budget;
the second value is a value obtained by subtracting the first duration value from the duration of the first timer;
the first target data packet is a data packet in a first data packet set;
the first duration value is determined based on a value obtained by subtracting T1 from T2;
T1 is one of the following:
a receiving time at which the first communication device receives the first data packet in the first data packet set; or
a time at which the first data packet in the first data packet set arrives at the first communication device; and
T2 is one of the following:
a receiving time at which the first communication device receives the first target data packet; or
a time at which the first target data packet arrives at the first communication device.

7. The method according to claim 5 or 6, wherein
when a third condition is met, the second delay budget is determined to be one of the following: the larger value of the first value and the fourth delay budget, or the larger value of the duration of the first timer and the fourth delay budget;
and/or
when a fourth condition is met, the second delay budget is determined to be one of the following: the first value or the second value;
and/or
when the third condition is met, the duration of the second timer is determined to be one of the following: the larger value of the first value and the second delay budget of the first target data packet, the larger value of the first value and the fourth delay budget, or the larger value of the duration of the first timer and the second delay budget of the first target data packet;
and/or
when the fourth condition is met, the duration of the second timer is determined to be one of the following: the first value or the second value, wherein
the first value is the value obtained by subtracting the first duration value from the first delay budget;
the second value is the value obtained by subtracting the first duration value from the duration of the first timer;
the third condition comprises at least one of the following:
the data packet in the data packet set is allowed to continue to be transmitted when the first delay budget expires and/or the first timer expires; or
the operation based on the second delay budget and/or the second timer is allowed to be performed on the data packet in the data packet set when the first delay budget expires and/or the first timer expires; and
the fourth condition comprises at least one of the following:
the data packet in the data packet set is not allowed to continue to be transmitted when the first delay budget expires and/or the first timer expires; or
the operation based on the second delay budget and/or the second timer is not allowed to be performed on the data packet in the data packet set when the first delay budget expires and/or the first timer expires.

8. The method according to claim 1, wherein the performing an operation based on the first timer on the data packet set comprises at least one of the following:
starting timing of the first timer of the data packet set based on a time at which the first data packet in the data packet set arrives at the first communication device;
discarding or continuing to transfer, for a data packet set whose first timer expires, a data packet in the data packet set;
scheduling the data packet in the data packet set based on the first timer;
determining, based on the first timer, at least one of the following information of the data packet in the data packet set: a scheduling priority, a scheduling weight, a sending priority, or a sending weight;
determining at least one of the following information of the data packet set based on the first timer: a scheduling priority, a scheduling weight, a sending priority, or a sending weight;
configuring a link layer function based on the first timer; or
determining the duration of the first timer based on one or more of the first delay budget, the second delay budget, and the fourth delay budget, wherein
the duration of the first timer is determined to be one of the following:
the first delay budget;
a sum of the first delay budget and the fourth delay budget;
a first access network delay budget; or
a sum of the first access network delay budget and the fourth access network delay budget, wherein
the first access network delay budget indicates one of the following: a delay budget for transferring a data packet set between a terminal and a RAN network element; or a value obtained by subtracting second core network delay information from the first delay budget.

9. The method according to claim 1, wherein the performing an operation based on the first delay budget on the data packet set comprises at least one of the following:
starting timing of the first delay budget of the data packet set based on a time at which the first data packet in the data packet set arrives at the first communication device;
discarding or continuing to transfer, for a data packet set whose first delay budget expires, a data packet in the data packet set;
scheduling the data packet in the data packet set based on the first delay budget;
determining, based on the first delay budget, at least one of the following information of the data packet in the data packet set: a scheduling priority, a scheduling weight, a sending priority, or a sending weight;
determining at least one of the following information of the data packet set based on the first delay budget: a scheduling priority, a scheduling weight, a sending priority, or a sending weight;
configuring a link layer function based on the first delay budget; or
determining the first delay budget based on one or more of the third delay budget and the fourth delay budget, wherein
the first delay budget is determined to be one of the following:
the third delay budget; or
a sum of the third delay budget and the fourth delay budget.

10. The method according to claim 1, wherein when a first condition is met, at least one of the following first operations is performed:
scheduling the data packet in the data packet set based on the second delay budget and/or the second timer;
skipping performing the packet discard operation on a data packet whose second delay budget expires and/or whose second timer expires;
performing the operation based on the first delay budget and/or the first timer on the data packet set, and skipping performing the packet discard operation on a data packet whose second delay budget expires and/or whose second timer expires;
performing the operation based on the first delay budget and/or the first timer on the data packet set; or
skipping performing the operation based on the second delay budget and/or the second timer on the data packet in the data packet set, wherein
the first condition comprises at least one of the following:
the first delay budget has not expired;
the first delay budget has not expired, and a remaining amount of the first delay budget is greater than or equal to the second delay budget;
the first timer has not expired; or
the first timer has not expired, and a remaining amount of the first timer is greater than or equal to the duration of the second timer.

11. The method according to claim 1, wherein when a second condition is met, at least one of the following first operations is performed:
performing the packet discard operation on a data packet whose second delay budget expires and/or whose second timer expires; or
performing the operation based on the second delay budget and/or the second timer on the data packet in the data packet set, wherein
the second condition comprises at least one of the following:
the first delay budget expires;
the first delay budget has not expired, and a remaining amount of the first delay budget is less than or equal to the second delay budget;
the data packet in the data packet set is allowed to continue to be transmitted when the first delay budget expires and/or the first timer expires;
the operation based on the second delay budget and/or the second timer is allowed to be performed on the data packet in the data packet set when the first delay budget expires and/or the first timer expires;
the first timer expires;
the first timer has not expired, and a remaining amount of the first timer is less than or equal to the duration of the second timer; or
the data packet in the data packet set arrives at the first communication device after the first delay budget and/or the first timer expires.

12. The method according to claim 10, wherein the performing the operation based on the first delay budget and/or the first timer on the data packet set comprises at least one of the following:
starting timing of the first timer or timing of the first delay budget when the first data packet in the data packet set arrives;
performing the packet discard operation on a data packet set whose first delay budget expires and/or whose first timer expires.
scheduling the data packet in the data packet set based on the first delay budget and/or the first timer;
determining, based on the first delay budget and/or the first timer, at least one of the following information of the data packet in the data packet set: a scheduling priority, a scheduling weight, a sending priority, or a sending weight;
determining at least one of the following information of the data packet set based on the first delay budget and/or the first timer: a scheduling priority, a scheduling weight, a sending priority, or a sending weight; or
configuring a link layer function based on the first delay budget and/or the first timer.

13. The method according to claim 1, wherein the performing the operation based on the second delay budget and/or the second timer on the data packet in the data packet set comprises at least one of the following:
starting timing of the second timer or timing of the second delay budget for the data packet in the data packet set;
starting timing of the second timer or timing of the second delay budget based on a time at which the data packet arrives at the first communication device;
performing the packet discard operation on a data packet whose second delay budget expires and/or whose second timer expires;
scheduling the data packet in the data packet set based on the second delay budget and/or the second timer;
determining at least one of the following information of the data packet in the data packet set based on the second delay budget and/or the second timer: a scheduling priority, a scheduling weight, a sending priority, or a sending weight; or
configuring a link layer function based on the second delay budget and/or the second timer.

14. The method according to claim 1, wherein when a fifth condition is met, at least one of the following first operations is performed:
skipping performing the packet discard operation on a data packet set whose first delay budget expires and/or whose first timer expires; or
performing the operation based on the second delay budget and/or the second timer on the data packet in the data packet set, wherein
the fifth condition comprises at least one of the following:
the first delay budget of the data packet set has not expired and/or the first timer of the data packet set has not expired;
the first delay budget of the data packet set expires and/or the first timer of the data packet set expires, and the data packet in the data packet set is allowed to continue to be transmitted when the first delay budget of the data packet set expires and/or the first timer of the data packet set expires; or
the first delay budget of the data packet set expires and/or the first timer of the data packet set expires, and the operation based on the second delay budget and/or the second timer is allowed to be performed on the data packet in the data packet set when the first delay budget of the data packet set expires and/or the first timer of the data packet set expires.

15. The method according to claim 1, wherein when a sixth condition is met, the following first operation is performed:
performing the packet discard operation on the data packet set whose first delay budget expires and/or whose first timer expires, wherein
the sixth condition comprises at least one of the following:
the first delay budget of the data packet set expires and/or the first timer of the data packet set expires;
the data packet in the data packet set is not allowed to continue to be transmitted when the first delay budget of the data packet set expires and/or the first timer of the data packet set expires;
the operation based on the second delay budget and/or the second timer is not allowed to be performed on the data packet in the data packet set when the first delay budget of the data packet set expires and/or the first timer of the data packet set expires; or
the data packet set is of a delay-sensitive guaranteed bit rate GBR type or a channel to which the data packet set belongs is of the delay-sensitive GBR type.

16. The method according to claim 1, wherein the scheduling the data packet in the data packet set based on the second delay budget and/or the second timer comprises:
when a seventh condition is met, re-performing timing of the second delay budget and/or the second timer corresponding to the data packet, wherein
the seventh condition comprises at least one of the following:
the second delay budget expires and/or the second timer expires;
a remaining amount of the first delay budget and/or a remaining amount of the first timer is greater than the second delay budget; or
the remaining amount of the first delay budget and/or the remaining amount of the first timer is greater than the duration of the second timer.

17. The method according to any one of claims 7, 10, 11, and 14 to 16, wherein an N^{th} condition further comprises at least one of the following:
the first communication device obtains the third delay budget and the fourth delay budget;
the data packet set is of the delay-sensitive type or the channel to which the data packet set belongs is of the delay-sensitive type;
the data packet set is of the delay-sensitive guaranteed bit rate GBR type or the channel to which the data packet set belongs is of the delay-sensitive GBR type; or
a local policy requires to discard the data packet whose second delay budget expires and/or whose second timer expires, wherein
N is one or more of 1 to 7.

18. A data processing method, applied to a second communication device, the method comprising:
obtaining second information, wherein the second information comprises at least one of the following: a first delay budget, a duration of a first timer, or a first indication; and
performing a second operation, wherein the second operation comprises at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

19. The method according to claim 18, wherein
the first delay budget indicates one of the following:
a delay budget for transferring a data packet set between a terminal and an anchor gateway;
a delay budget for transferring a data packet set between the terminal and an RAN network element; or
a value obtained by subtracting second core network delay information from the delay budget for transferring a data packet set between the terminal and the anchor gateway;
and/or
the second delay budget indicates one of the following:
a delay budget for transferring a data packet between the terminal and the anchor gateway;
a delay budget for transferring a data packet between the terminal and the RAN network element, or
a value obtained by subtracting the second core network delay information from the delay budget for transferring a data packet between the terminal and the anchor gateway.

20. The method according to claim 18, wherein the performing an operation corresponding to the first delay budget and/or the first timer comprises one of the following:
starting timing of the first delay budget and/or the first timer of the data packet set based on a time at which the first data packet in the data packet set arrives at the second communication device;
discarding or continuing to transfer, for a data packet set whose first delay budget and/or first timer expires, a data packet in the data packet set;
scheduling the data packet in the data packet set based on the first delay budget and/or the first timer;
determining, based on the first delay budget and/or the first timer, at least one of the following information of the data packet in the data packet set: a scheduling priority, a scheduling weight, a sending priority, or a sending weight;
determining at least one of the following information of the data packet set based on the first delay budget and/or the first timer: a scheduling priority, a scheduling weight, a sending priority, or a sending weight;
configuring a link layer function based on the first delay budget and/or the first timer;
determining the duration of the first timer based on the first delay budget; or
determining that the duration of the first timer is the first delay budget.

21. The method according to claim 18, wherein the determining a second delay budget of a data packet in a data packet set comprises one of the following:
determining a second delay budget of a second target data packet based on a value obtained by subtracting a second duration value from fourth information;
determining a second delay budget of the first data packet in a second data packet set based on the fourth information; or
determining the second delay budget of the second target data packet based on the fourth information, wherein
the fourth information is one of the following: the first delay budget, a first access network delay budget, or the duration of the first timer;
the second target data packet is a data packet in the second data packet set;
the second duration value is determined based on a value obtained by subtracting T3 from T4;
T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at a terminal; and
T4 is one of the following:
a receiving time at which the second communication device receives the second target data packet;
a time at which the second target data packet arrives at the second communication device; or
a time at which the second target data packet starts waiting for scheduling at the terminal.

22. The method according to claim 18, wherein the determining a duration of a second timer of the data packet in the data packet set comprises one of the following:
determining a duration of a second timer of a second target data packet based on a value obtained by subtracting a second duration value from fourth information;
determining a duration of a second timer of the first data packet in a second data packet set based on the fourth information;
determining the duration of the second timer of the second target data packet based on the fourth information; or
determining the duration of the second timer of the second target data packet based on a second delay budget, wherein
the fourth information is one of the following: a first delay budget, a first access network delay budget, or a duration of a first timer;
the second target data packet is a data packet in the second data packet set;
the second duration value is determined based on a value obtained by subtracting T3 from T4;
T3 is one of the following:
a receiving time at which the second communication device receives the first data packet in the second data packet set;
a time at which the first data packet in the second data packet set arrives at the second communication device; or
a time at which the first data packet in the second data packet set starts waiting for scheduling at a terminal; and
T4 is one of the following:
a receiving time at which the second communication device receives the second target data packet;
a time at which the second target data packet arrives at the second communication device; or
a time at which the second target data packet starts waiting for scheduling at the terminal.

23. The method according to claim 18, wherein the performing an operation corresponding to the second delay budget and/or the second timer comprises at least one of the following:
determining at least one of the following information of the data packet in the data packet set based on the second delay budget and/or the second timer: a scheduling priority, a scheduling weight, a sending priority, or a sending weight;
configuring a link layer function based on the second delay budget and/or the second timer; or
discarding or continuing to transfer the data packet in the data packet set when the second delay budget and/or the second timer expires.

24. A data processing method, applied to a third communication device, the method comprising:
obtaining third information, wherein the third information comprises at least one of the following: a first delay requirement, a second delay requirement, or a first indication; and
performing a third operation based on the third information, wherein
the third operation comprises at least one of the following:
determining first information; or
sending the first information, wherein the first information comprises at least one of the following: a third delay budget, a fourth delay budget, or the first indication, wherein
the first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

25. The method according to claim 24, wherein
the third information is a QoS requirement and/or a data transfer requirement for a first object;
the first information is a QoS requirement and/or a data transfer requirement for a second object;
the first object comprises at least one of the following: a data flow, a QoS policy corresponding to a data flow, a QoS policy corresponding to a data packet set, or a data packet set; and
the second object comprises at least one of the following: a channel or a data packet set.

26. The method according to claim 24, wherein
the third information is a QoS requirement and/or a data transfer requirement for a third object;
the first information is a QoS requirement and/or a data transfer requirement for a fourth object;
the third object comprises at least one of the following: a data flow, a media data packet set, or a data packet set; and
the fourth object comprises at least one of the following: a QoS policy corresponding to a data flow, a QoS policy corresponding to a data packet set, or a data packet set.

27. The method according to claim 25, wherein
the first delay requirement indicates that a delay for transferring a data packet set between a terminal and an anchor gateway does not exceed a duration of the delay requirement;
the third delay budget indicates one of the following:
a delay budget for transferring a data packet set between the terminal and the anchor gateway; or
a delay budget for transferring a data packet set between the terminal and an RAN network element;
and/or
the second delay requirement indicates that a delay for transferring a data packet between the terminal and the anchor gateway does not exceed a duration of the delay requirement;
and/or
the fourth delay budget indicates one of the following:
a delay budget for transferring a data packet between the terminal and the anchor gateway; or
a delay budget for transferring a data packet between the terminal and the RAN network element.

28. A data processing method, applied to a fourth communication device, the method comprising:
sending third information, wherein the third information comprises at least one of the following: a first delay requirement, a second delay requirement, or a first indication, wherein
the first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

29. The method according to claim 28, wherein
the third information is a QoS requirement and/or a data transfer requirement for a first object; and
the first object comprises at least one of the following: a data flow, a QoS policy corresponding to a data flow, a QoS policy corresponding to a data packet set, or a data packet set.

30. The method according to claim 28, wherein
the third information is a QoS requirement and/or a data transfer requirement for a third object; and
the third object comprises at least one of the following: a data flow, a media data packet set, or a data packet set.

31. The method according to claim 28, wherein
the first delay requirement indicates that a delay for transferring a data packet set between a terminal and an anchor gateway does not exceed a duration of the delay requirement;
and/or
the second delay requirement indicates that a delay for transferring a data packet between the terminal and the anchor gateway does not exceed a duration of the delay requirement.

32. A data processing apparatus, used in a first communication device, the apparatus comprising:
a first processing module, configured to perform a first operation, wherein the first operation comprises at least one of the following:
obtaining first information, wherein the first information comprises at least one of the following: a third delay budget, a fourth delay budget, or a first indication;
determining a second delay budget of a data packet in a data packet set;
determining a duration of a second timer of the data packet in the data packet set;
scheduling the data packet in the data packet set based on the second delay budget and/or the second timer;
performing a packet discard operation on the data packet in the data packet set based on the second delay budget and/or the second timer;
skipping performing the packet discard operation on a data packet whose second delay budget expires and/or whose second timer expires, or performing the packet discard operation on the data packet whose second delay budget expires and/or whose second timer expires;
skipping performing an operation based on the second delay budget and/or the second timer on the data packet in the data packet set, or performing the operation based on the second delay budget and/or the second timer on the data packet in the data packet set;
determining a first delay budget;
performing an operation based on the first delay budget on the data packet set;
determining a duration of a first timer;
performing an operation based on the first timer on the data packet set;
skipping performing the packet discard operation on a data packet set whose first delay budget expires and/or whose first timer expires, or performing the packet discard operation on the data packet set whose first delay budget expires and/or whose first timer expires; or
sending at least one of the following to a first target device: the duration of the first timer, the first delay budget, or the first indication, wherein
the first indication indicates at least one of the following:
whether the data packet in the data packet set is allowed to continue to be transmitted when the first delay budget of the data packet set expires and/or the first timer of the data packet set expires; or
whether the operation based on the second delay budget and/or the second timer is allowed to be performed on the data packet in the data packet set when the first delay budget of the data packet set expires and/or the first timer of the data packet set expires.

33. A data processing apparatus, used in a second communication device, the apparatus comprising:
a first obtaining module, configured to obtain second information, wherein the second information comprises at least one of the following: a first delay budget, a duration of a first timer, or a first indication; and
a second processing module, configured to perform a second operation, wherein the second operation comprises at least one of the following:
performing an operation corresponding to the first delay budget and/or the first timer;
determining a second delay budget of a data packet in a data packet set;
determining a duration of a second timer of the data packet in the data packet set; or
performing an operation corresponding to the second delay budget and/or the second timer.

34. A data processing apparatus, used in a third communication device, the apparatus comprising:
a second obtaining module, configured to obtain third information, wherein the third information comprises at least one of the following: a first delay requirement, a second delay requirement, or a first indication; and
a third processing module, configured to perform a third operation based on the third information, wherein
the third operation comprises at least one of the following:
determining first information; or
sending the first information, wherein the first information comprises at least one of the following: a third delay budget, a fourth delay budget, or the first indication, wherein
the first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

35. A data processing apparatus, used in a fourth communication device, the apparatus comprising:
a first sending module, configured to send third information, wherein the third information comprises at least one of the following: a first delay requirement, a second delay requirement, or a first indication, wherein
the first indication indicates at least one of the following:
whether a data packet in a data packet set is allowed to continue to be transmitted when a first delay budget of the data packet set expires and/or a first timer of the data packet set expires; or
whether an operation based on a second delay budget and/or a second timer is allowed to be performed on the data packet in the data packet set when the first delay budget of the data packet set expires and/or the first timer of the data packet set expires.

36. A communication device, comprising a processor, a memory, and a computer program stored in the memory and executable on the processor, wherein when the computer program is executed by the processor, steps of the data processing method according to any one of claims 1 to 31 are implemented.

37. A computer-readable storage medium, storing a computer program, wherein when the computer program is executed by a processor, steps of the data processing method according to any one of claims 1 to 31 are implemented.
